(19) Europäisches Patentamt
European Patent Office
Office européen des brevets

(11) Veröffentlichungsnummer: **0 268 168 B1**

(12) **EUROPÄISCHE PATENTSCHRIFT**

(45) Veröffentlichungstag der Patentschrift: **16.12.92**

(51) Int. Cl.⁵: **C08L 25/16**, C08L 31/00, C08L 33/06

(21) Anmeldenummer: **87116462.0**

(22) Anmeldetag: **07.11.87**

(54) **Verträgliche Polymermischungen.**

(30) Priorität: **11.11.86 DE 3638443**
**17.09.87 DE 3731248**

(43) Veröffentlichungstag der Anmeldung:
**25.05.88 Patentblatt 88/21**

(45) Bekanntmachung des Hinweises auf die Patenterteilung:
**16.12.92 Patentblatt 92/51**

(84) Benannte Vertragsstaaten:
**FR GB IT NL**

(56) Entgegenhaltungen:
**EP-A- 0 264 645**
**DE-A- 3 436 476**

(73) Patentinhaber: **Röhm GmbH**
**Kirschenallee Postfach 4242**
**W-6100 Darmstadt 1(DE)**

(72) Erfinder: **Siol, Werner, Dr.**
**Goerdelerweg 34**
**W-6100 Darmstad-Eberstadt(DE)**
Erfinder: **Terbrach, Ulrich**
**Berliner Strasse 3**
**W-6107 Reinheim 2(DE)**

**EP 0 268 168 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft verträgliche Polymermischungen (Polymer Blends) aus einem alkylsubstituierten Polystyrol als Polymerkomponente P1 und einer Carbonylgruppen enthaltenden Polymerkomponente P2.

Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.
Gewisse Ausnahmen von dieser Regel haben zunehmendes Interesse speziell bei den mit der theoretischen Deutung der Phänomene befaßten Fachleuten hervorgerufen. Völlig kompatible Mischungen von Polymeren zeigen völlige Löslichkeit (Mischbarkeit) in allen Mischungsverhältnissen.

Eine zusammenfassende Darstellung über mischbare Polymersysteme findet sich z.B. bei D.R. Paul et al. in Polymer & Engineering Science 18, (16) 1225 - 34 (1978); J. Macromol. Sci.-Rev. Macromol. Chem. C. 18 (1) 109 - 168 (1980) sowie in Annu. Rev. Mater. Sci., 1981, 299 - 319.

Zum Nacheis der Mischbarkeit wurde häufig die Glastemperatur Tg oder die sogenannte "Optische Methode" (Klarheit eines aus homogener Lösung des Polymergemischs gegossenen Films) herangezogen. (Vgl. Brandrup-Immergut, Polymer Handbook, 3rd Ed., III-211-213). Als ein weiterer Test auf die Mischbarkeit von unter sich verschiedenen Polymeren wird das Auftreten der unteren kritischen Lösungstemperatur (Lower Critical Temperature = LCST) herangezogen. (Vgl. DE-A 34 36 476.5 und DE-A 34 36 477.3) Das Auftreten der LCST beruht auf dem Vorgang, daß sich beim Erwärmen die bis anhin klare, homogene Polymermischung in Phasen auftrennt und optisch trübe bis opak wird. Dieses Verhalten stellt nach der Literatur einen eindeutigen Beweis dafür dar, daß de ursprüngliche Polymermischung aus einer einzigen, im Gleichgewicht befindlichen homogenen Phase bestanden hatte. Zur weiteren Charakterisierung von Blends siehe auch den Beitrag von M.T. Shaw: "Microscopy and Other Methods of Studying Blends" in "Polymer Blends and Mixtures" Edited by D.J. Walsh, J.S. Higgins and A. Maconnachie, NATO ASI Series, Series E: Applied Sciences-No. 89, S. 37 - 56, Martinus Nijhoff Publishers, Dordrecht/Boston/Lancester 1985.
Beispiele für vorhandene Mischbarkeit stellen z.B. die Systeme Polyvinylidenfluorid mit Polymethylmethacrylat (PMMA) oder mit Polyethylmethacrylat dar. (US-PS 3 253 060 US-PS 3 458 391, US-PS 3 459 843).
Neuere Ergebnisse über "Polymer Blends" und mögliche Anwendung derselben werden von L.M. Robeson in Polym. Engineering & Science 24 (8) 587 - 597 (1984) berichtet.
Copolymere aus Styrol und Maleinsäureanhydrid, sowie aus Styrol und Acrylnitril sind unter gewissen Voraussetzungen mit Polymethylmethacrylat (PMMA) verträglich (DE-A 20 24 940). Hervorgehoben wurden die verbesserten Gebrauchseigenschaften von Formmassen dieser Typen. Ebenso sind Copolymere aus Styrol und zur Wasserstoffbrückenbindung befähigte Hydroxylgruppenhaltige Monomere bei bestimmter Zusammensetzung mit Polymethacrylaten verträglich, so z.B. Copolymere aus Styrol und p-(2-Hydroxylhexafluoroisopropyl)styrol [B.Y. Min and Eli M. Pearce, Organic Coating and P1astics Chemistry, 45, (1981) 58 - 64], oder Copolymere aus Styrol und Allylalkohol (F. Cangelosi and M.T. Shaw, Polymer Preprints (Am. Chem. Soc. Div. Polym. Chem.) 24, (1983), 258 - 259].
Polystyrol selbst sowie andere Styrole enthaltende Polymere gelten hingegen als mit Polymethylmethacrylat unverträglich. So wird von Shaw. M.T. and Somani, R.H. eine Mischbarkeit von nur 3,4 ppm (PMMA mit einem Molekulargewicht von 160 000) bzw. von 7,5 ppm (PMMA mit einem Molekulargewicht von 75 000) mit Polystyrol angegeben [Adv. Chem. Ser. 1984, 206 (Polym. Blends Compos. Multiphase Syst.), 33 - 42 (C.A. 101 : 73417 e)]. Sogar sehr niedermolekulares Polystyrol ist mit PMMA wenig verträglich. So ergibt bereits eine Mischung aus 20 % eines extrem niedermolekularen Styrol-Oligomeren (MW : 3 100) kein klares Produkt mehr. Bei einem ebenfalls noch sehr niedrigen Molekulargewicht von 9 600 ist sogar eine nur 5 %-ige Lösung in PMMA nur noch translucent. (Raymond R. Parent and Edward V. Tompson, Journal of Polymer Science: Polymer Physics Edition, Vol. 16, 1829 bis 1947 (1978)).

Ebensowenig sind andere Polymethacrylate und Polyacrylate mit Polystyrol zu transparenten Kunststoffen abmischbar. Dies gilt z.B. für Polyethylmethacrylat, Polybutylmethacrylat, Polyisobutylmethacrylat, Polyneopentylmethacrylat, Polyhexylmethacrylat und viele andere. Vgl. auch R.H. Somani and M.T. Shaw, Macromolecules 14, 1549 - 1554 (1981).

Eine Ausnahme in dieser generell beobachteten Unverträglichkeit zwischen Poly(meth)acrylat und Polystyrol wird in zwei neueren Patentanmeldungen berichtet (P 36 32 370.5 und P 36 32 369.1, noch unveröffentlicht). Danach sind Polystyrol bzw. Poly-$\alpha$-methylstyrolmit Polycyclohexylmethacrylat und Polycyclohexylacrylat außerordentlich gut verträglich. Die Verträglichkeit der Polycyclohexyl(meth)acrylat mit Polystyrol und Poly-$\alpha$-methylstyrol ist dabei so gut, daß Verträglichkeit zwischen dem Styrol enthaltenden

Polymeren und dem Cyclohexyl(meth)acrylat enthaltenden Polymeren auch dann noch gegeben ist, wenn das Cyclohexyl(meth)acrylat zu weniger als 50 Gew.-% (z.B. 30 Gew.-%) in dem Copolymeren enthalten ist. Ebenso kann das Styrol weitgehend durch andere Comonomeren ersetzt werden, ohne daß die Verträglichkeit zwischen dem Styrol enthaltenden Polymeren und dem Cyclohexyl(meth)acrylat enthaltenden Polymeren verloren geht.

Neben dieser außergewöhnlichen, völligen Mischbarkeit von Cyclohexyl(meth)acrylat mit Polystyrol und Poly-α-methylstyrol wird eine Mischbarkeit von Polystyrol nur noch mit Polyvinylmethylether, Polyphenylenoxid und Tetramethylbisphenol-A-polycarbonat beschrieben (D.R. Paul and J.W. Barlow, J. Macromol. Sci-Rev. Macromol. Chem., C 18 (1), 109 - 168 (1980)).

Die Mischbarkeit wird dabei in der Regel durch spezifische Wechselwirkungen zwischen den verschiedenen Polymerspezies erklärt. So werden de oben genannten, verträglichen Polymermischungen (z.B. Tetramethylbisphenol-A-polycarbonat/Polystyrol) durch Elektronen-Donator-Aceptor-Komplexbildung erklärt. (vgl. J.W. Barlow and D.R. Paul, Annu. Rev. Mater. Sci, 1981, 299 - 319).

Der größte Teil der bislang bekannten verträglichen Polymermischungen wird jedoch auf spezielle Wechselwirkungen vom Typ der Wasserstoffbrückenbindung zurückgefuhrt (so z.B. Phenoxy/Polyester, PVC/Polyester, SAA/Polyester, PC/PHFA, PVDF/PMMA, siehe J.W. Barlow and D.R. Paul, Annu. Rev. Mater. Sci. 1981, 303, 304).

Während also die oben genannten verträglichen Polymermischungen auf Wasserstoffbrückenbindungen oder Elektronen-Donator-Acceptor-Komplexbildung zurückgeführt werden, erklärt man die Verträglichkeit von PMMA mit speziellen Copolymeren aus Styrol und Acrylnitril oder α-Methylstyrol und Acrylnitril, die jeweils nur bei einem bestimmten Styrol/Acrylnitril- oder α-Methylstyrol/Acrylnitril-Verhältnis gefunden wird, durch eine intramolekulare Abstoßung innerhalb des Copolymeren zwischen den beiden Comonomeren Styrol und Acrylnitril. Damit ist auch verständlich, daß Verträglichkeit (beispielsweise zwischen PMMA und SAN) nur für eine ganz spezielle Zusammensetzung des Copolymeren gefunden wird. Da Verträglichkeit nur bei ganz speziellen Comonomerverhältnissen gefunden wird, spricht man von "Mischbarkeitsfenstern". (J.-L.G. Pfennig et al, Macromolecules 1985, 18, 1937 - 1940). Solche "Mischbarkeitsfenster" werden auch bei verträglichen Mischungen aus aliphatischen Polyestern und Polyhydroxyethern des Bisphenol A berichtet. Hier werden die aliphatischen Polyester als Copolymere aus $CH_x$- und COO-Monomerbausteinen betrachtet. (D.R. Paul and J.W. Barlow, Polymer, 25, 487 (1984)). Paul and Barlow konnten mit dieser Arbeit aufzeigen, daß eine exotherme Mischbarkeit als Triebkraft für die Mischbarkeit auch dann existieren kann, wenn keiner der Wechselwirkungsparameter negativ ist. Erforderlich ist nur eine genügend große Abstoßungsenergie zwischen den Comonomeren des Copolymeren.

Mit eben diesem Konzept erklären auch Gerrit ten Brinke et al. die Mischbarkeit von Halogen-substituierten Styrol-Copolymeren mt Poly-(2,6-dimethyl-1,4-phenylenoxid) (Macromolecules 1983, 16, 1827 - 32) und Ougizawa und Inoue, Polym. J., 18, 521 - 527 (1986) die Mischbarkeit von Poly(acrylnitril-co-styrol) mit Poly(acrylnitril-cobutadiene).

Während also einerseits die Verträglichkeit von speziellen Copolymeren mit anderen Polymeren - wie oben ausgeführt - durch intramolekulare Abstoßung innerhalb der Copolymeren und damit auch die gefundenen "Mischbarkeitsfenster" erklärt werden, werden zur Interpretation der Verträglichkeit von Homopolymeren stets spezielle Wechselwirkungen (z.B. EDA-Komplexe im Falle Polyphenylenoxid/Polystyrol oder Wasserstoffbrückenbindungen im System PVDF/PMMA) herangezogen. Es existiert demnach keine in sich geschlossene Theorie der Mischbarkeit im Polymeren, nach der das Auffinden neuer verträglicher Polymermischungen möglich gewesen wäre. Solche verträglichen Polymermischungen werden jedoch für viele Anwendungen gesucht.

So haben Abmischungen von Polymeren (Polyblends) in bestimmten Fällen und auf bestimmten Gebieten der Kunststoffindustrie zu eigenschaftsmäßig verbesserten Kunststoffprodukten gefuhrt (vgl. Kirk-Othmer, 3rd Ed. Vol. 18, pp 443 - 478, J. Wiley 1982). Die physikalischen Eigenschaften solcher "Polyblends" stellen gewöhnlich einen Kompromiß dar, der unter dem Strich eine Verbesserung gegenüber den Eigenschaften der individuellen Polymeren bedeuten kann. Dabei haben **multiphasische** Polymermischungen eine ungleich größere kommerzielle Bedeutung erlangt als die verträglichen Mischungen (vgl. Kirk-Othmer loc.cit. pg. 449).

Aufgabe und Lösung

Multiphasische und verträgliche Polymermischungen sind somit sowohl hinsichtlich ihrer physikalischen als auch ihrer anwendungstechnisch relevanten, insbesondere ihrer optischen Eigenschaften (Transparenz, Klarheit usw.) streng auseinanderzuhalten. Wie bereits ausgeführt, setzt öfters mangelnde Verträglichkeit dem Abmischen von Kunststoffen mit dem Ziel, dadurch ein verbessertes Gesamt-Eigenschaftsspektrum zu

erreichen, enge Grenzen. Der Stand der Technik bot jedoch keine Lehre zum Auffinden der von der Technik geforderten verträglichen Polymermischungen an.
Besonders unbefriedigend mußte vor allem der Umstand sein, daß die Interpretation der bisher bekannten Polymermischungen, d.h. insbesondere die Art der angenommenen spezifischen Wechselwirkungen, so z.B. die Annahme von Wasserstoffbrückenbindungen zwischen PVDF und PMMA, also Wasserstoffbrücken ausgehend von der -$CH_2$-$CF_2$-Gruppe des PVDF zur Estergruppe des PMMA, jeder Erfahrung widerspricht. Gleiches gilt für die oft zitierten Wasserstoffbrückenbindungen zwischen PVC und PMMA.
Die vorliegende Erfindung bedient sich der Erkenntnis, daß derartige der Erfahrung widersprechende Annahmen (wie Wasserstoffbrücken zwischen PVDF und PMMA oder zwischen PVC und PMMA) für ein Verständnis der Mischbarkeit dieser Polymeren gar nicht erforderlich sind. Es wurde vielmehr gefunden, daß das zur Erklärung der Verträglichkeit von Copolymeren aufgestellte Konzept der Abstoßung zwischen den Comonomerbausteinen (z.B. die Abstoßung zwischen Styrol und Acrylnitril im SAN), auf Homopolymeren übertragen werden kann und daß daraus Regeln zum technischen Handeln abgeleitet werden können.
Die neuartige Lehre zum Verständnis von Polymermischungen sieht demnach dann Mischbarkeit zwischen verschiedenartigen Polymeren P1 und P2 vor, wenn:

1) Polymer P1 aus Monomerbausteinen mit wenigstens zwei chemisch von einander unterscheidbaren Untereinheiten aufgebaut ist, die sich gegenseitig abstoßen, und

2) Polymer P2 ebenfalls aus Monomerbausteinen besteht, die ihrerseits wiederum aus wenigstens zwei chemisch von einander unterscheidbaren Untereinheiten bestehen, die sich ebenfalls gegenseitig abstoßen, und

3) eine negative oder nur geringfügig positive Mischungsenthalpie für die Mischung der hydrierten Monomerbausteine von PolymerP1 mit PolymerP2 gemessen wird. ( = H1 u. H2 )

Die neuartige Lehre erklärt zwanglos die Mischbarkeit zwischen Halogen-haltigen Polymeren einerseits und Carbonylgruppen enthaltenden Polymeren andererseits, was im folgenden demonstriert werden soll. Die dabei erforderlichen Daten können allgemeinen Tabellenwerken, wie z.B. Landoldt-Börnstein, 5. u 6. Auflage, Berlin, Julius-Springer-Verlag, entnommen werden.
Abb. 1 zeigt die Mischungswärme von Perfluorhexan und Hexan. Wie aus Abb. 1 ersehen werden kann, ist diese Mischung stark endotherm; so beträgt $\Delta H_{Mischung}$ für eine äquimolare Mischung + 500 cal/Mol Mischung. Ebenso stark endotherm ist die entsprechende Mischung aus Perfluorcyclohexan und Cyclohexan (siehe Abb. 2). Wie an weiteren Beispielen belegt werden kann, sind Mischungen aus Alkanen und Perfluoralkanen generell endotherm. Damit sind also beim PVDF in einem Monomerbaustein zwei Untereinheiten (die $CH_2$- und die $CF_2$-Gruppen) vereint, die sich abstoßen.

Ebenso ist das PMMA aus zwei sich abstoßenden Untereinheiten, einem Kohlenwasserstoffrest und einer Estergruppe aufgebaut.
Abb. 3 zeigt die Mischungswärme von Essigsäureäthylester und Decalin (288 cal/Mol Mischung), Abb. 4 die Mischungswärme von Pentanon (3) und n-Heptan. Auch hier sieht man eine ausgeprägte Abstoßung zwischen Carbonylgruppen und Alkan. In Abb. 5 ist die Abstoßung zwischen Aliphat (Cyclohexan) und Carbonylgruppe als Temperaturänderung beim Mischen dargestellt. Wie man sieht, nimmt die Abstoßung mit zunehmendem Gehalt an Carbonylgruppen im Ester zu. Entsprechend kommt es zu einer deutlich ausgeprägten Abkuhlung beim Mischen . Demnach kann die Verträglichkeit von PVDF und PMMA als direkte Folge der Abstoßung zwischen den $CH_2$- und $CF_2$-Untereinheiten des PVDF sowie der Abstoßung zwischen dem aliphatischen Teil und der Estergruppe des PMMA verstanden werden. Völlig analog kann die Verträglichkeit von PVC mit PMMA interpretiert werden. So ist z.B. die Mischung von Chloroform und Cyclohexan endotherm (165 cal/Mol Mischung für eine 1 : 1 Mischung). Dagegen ist die der Polymermischung PVC/PMMA entsprechende Mischung 1,1,2,2,-Tetrachloräthan/ Essigsäureäthylester (- 608 cal/Mol Mischung für eine 1 : 1 Mischung) stark exotherm. Ebenso exotherm ist die Mischung Chloroform/Aceton, die in Abb. 6 dargestellt ist. Die neuartige Interpretation der Mischbarkeit von PVDF/PMMA und Chlorhaltigen Kohlenwasserstoffen/PMMA ist eine direkte Folge des überraschenden Auffindens einer ganzen Klasse von verträglichen Polymeren, die mit den Regeln und Kriterien des Standes der Technik nicht erklärt geschweige denn vorhergesagt hatte werden können.
Es handelt sich bei der neuen erfindungsgemäßen Klasse von verträglichen Polymeren um die Mischung von zwei Polymerspezies, deren Verträglichkeit z.B. weder durch Wasserstoffbrückenbindungen noch durch EDA-Komplexbildung erklärbar ist.

So wurde überraschenderweise gefunden, daß Polymermischungen PM aus zwei verschiedenen Polymeren P1 und P2 dann gute Verträglichkeit aufweisen, wenn
Polymer P1
aus Monomeren der Formel I aufgebaut ist oder diese Monomeren als Hauptbestandteil enthält

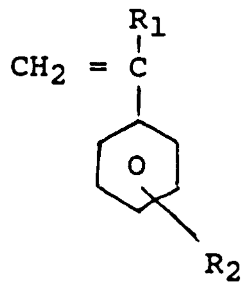

I

wobei $R_1$ für Wasserstoff oder Methyl und $R_2$ für einen Kohlenwasserstoffrest mit 1 - 18 vorzugsweise 1 - 12 Kohlenstoffatomen und
Polymer P2
aus Monomeren der Formel II aufgebaut ist oder diese als Hauptbestandteil enthält,

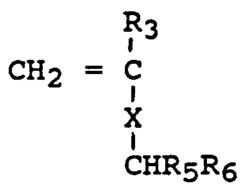

II

wobei $R_3$ für Wasserstoff, Methyl oder eine Gruppe

$- CH_2 - X - CHR_5R_6$

X für eine Gruppe

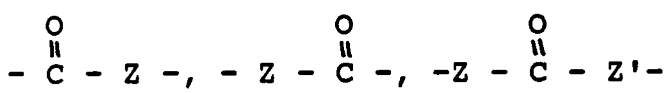

mit der Bedeutung
Z = Sauerstoff oder $NR_4$
Z' = Sauerstoff oder $NR_4$ und
$R_4$ = Wasserstoff oder ein Alkylrest mit 1 - 12 vorzugsweise 1 - 5 Kohlenstoffatomen
$-CHR_5R_6$
für einen aliphatischen oder araliphatischen Kohlenwasserstoffrest mit 5 - 24 Kohlenwasserstoffatomen steht, wobei $R_5$ und $R_6$ entweder zu einem gegebenenfalls substituierten Ring mit 5 - 12 Kohlenstoffatomen im Ring verbunden sind oder $R_5$ für Wasserstoff oder einen aliphatischen Kohlenwasserstoffrest mit 1 - 5 Kohlenstoffatomen und $R_6$ für einen gegebenenfalls verzweigten aliphatischen, araliphatischen oder aromatischen Kohlenwasserstoffrest mit 4 - 18 Kohlenstoffatomen steht. Vorzugsweise steht auch $R_2$ für einen aliphatischen Kohlenwasserstoffrest. Bei den gegebenenfalls substituierten Resten handelt es sich um inerte Substituenten, beispielsweise um n-Alkyl, iso-Alkyl und tert.Alkylgruppen mit 1-6 Kohlenstoffatomen z.B. Methyl-, Ethyl-, Propyl-, Isopropyl-, Butyl etc. (Siehe im weiteren auch Beschreibung der $R_2$-Gruppe als $-CH_3CR_7R_8$, vgl. Seite 18).

Besonderes Interesse finden solche Polymermischungen PM aus Polymeren P1 und Polymeren P2, die die zusätzlichen Bedingung erfüllen, daß die Van der Waals-Volumina $V_W$ der

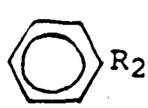

$R_2$-Gruppe

der Beziehung genügen:

(1) $V_{W-X-CHR_5R_6} \cdot 1{,}8 >$ 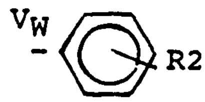 $> 0{,}6 \cdot V_{W-X-CHR_5R_6}$

Darin steht

$$V_{W-X-CHR_5R_6}$$

für das Van der Waals-Volumen, ausgedrückt in $cm^3$/Mol, der $-XCHR_5R_6$-Gruppe und

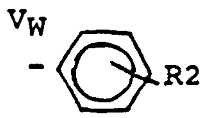

für das entsprechende Van der Waals-Volumen der

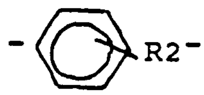 Gruppe.

Zur Definition der Van der Waals Volumina vgl. A. Bondi, J. Phys.Chem. 68, 441 (1964); M.Charton in Topics in Current Cemistry, Vol 114, Steric Effects in Drug Design, pg. 107, Springer Verlag 1983.
Besonders bevorzugt sind solche Polymermischungen PM, die der Bedingung genügen:

(2) $V_{W-X-CHR_5R_6} \cdot 1{,}5 >$ 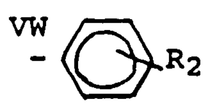 $> 0{,}7 \cdot V_{W-X-CHR_5R_6}$

Weiterhin bevorzugt sind solche Polymermischungen PM, die der Bedingung genügend, daß die hydrierten (gesättigten) Monomerbausteine des Polymeren P1

H1 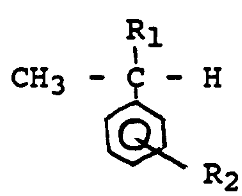

und die hydrierten Monomerbau-steine des Polymeren P2

H2 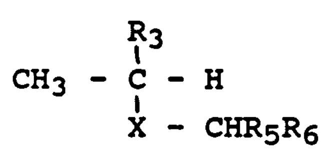

höchstens eine gering positive Mischungsenthalpie (d.h. $\Delta H_{Mischung\ H1/H2} < 50$ cal/Mol Mischung oder bevorzugt eine negative Mischungsenthalpie aufweisen, so daß gilt:

$\Delta H_{Mischung\ H1/H2} < 0$ cal/Mol Mischung

In der Regel wird diese exotherme Mischung der hydrierten Monomerbausteine und damit auch die Mischbarkeit der Polymeren P1 und P2 durch eine Abstoßung innerhalb der Monomerbausteine des Polymeren P1 und innerhalb der Monomerbausteine des Polymeren P2 hervorgerufen, wie dies anfangs am Beispiel PVDF/PMMA bzw. PVC/PMMA dargestellt wurde.

Dabei beruht die Abstoßung innerhalb des Monomerbausteins des Polymeren P2 auf der oben ausgeführten Abstoßung zwischen der polaren X-Gruppe und der aliphatischen $-CH_2-CR_3$-Gruppe sowie der $-CHR_5R_6$-Gruppe. Als Beispiel für diese Abstoßungskräfte kann wieder Abbildung 3 herangezogen werden.

Dagegen beruht die Abstoßung innerhalb des Monomerbausteins des Polymeren P1 auf der Abstoßung zwischen aliphatischen und aromatischen Kohlenwasserstoffen. In Abb.7 ist als Beispiel die Mischungswärme von n-Hexan und Benzol dargestellt. Dabei gilt ganz allgemein als Regel, daß eine Verträglichkeit von Polymer P1 und Polymer P2 vor allem dann gegeben ist, wenn die Abstoßungskräfte innerhalb der Monomerbausteine besonders groß sind. Es wird daher vor allem dann gute Mischbarkeit zwschen den Polymeren P1 und P2 gefunden, wenn der in der Hauptkette befindliche aliphatische Teil, der im Monomerbaustein des Polymeren P1 der Phenylengruppe und im Monomerbaustein des Polymeren P2 der polaren Gruppe X direkt benachbart ist, möglichst ausgeprägt ist. Damit gilt, daß in der Regel bei Polymeren mit $R_1 = CH_3$ bessere Verträglichkeit mit den Polymeren P2 gefunden wird als bei Polymeren, bei denen $R_1$ = Wasserstoff ist. Dies gilt insbesondere für einen kleinen $R_2$-Rest. ($R_2 = C_1 - C_4$) Ganz analog wird auch innerhalb der Gruppe der Polymeren P2 häufig dann eine besonders gute Verträglichkeit mit den Polymeren P1 gefunden, wenn $R_3 = CH_3$ ist.

Ferner ist es von Vorteil, wenn die Gruppe $CHR_5R_6$ einen in sich geschlossenen, kompakten Kohlenwasserstoff bildet, wobei in der Regel darauf zu achten ist, daß die Gruppe $X-CHR_5R_6$ in ihrem Platzbedarf der

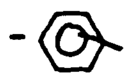 $R_2$-Gruppe

angepaßt ist (d.h. es liegen vergleichbare Van der Waals Volumina der Gruppen vor.)

Während bei größen Substituenten $R_2$ (z.B. $R_2 \geqq 4$ Kohlenstoffatome) eine Vielzahl von Substituenten-$CHR_5R_6$ in Frage kommt, solange der $CHR_5R_6$-Rest nur wenigstens 5 Kohlenstoffatome aufweist, sind insbesondere bei kleinem $R_2$-Rest (z.B. $R_2 = CH_3$) $CHR_5R_6$-Reste vom Typ Cycloaliphat oder Phenylalkylreste bevorzugt.

Die $R_2$-Gruppe kann prinzipiell in o, m oder p-Position am Phenylrest lokalisiert sein. Bevorzugt ist dabei jedoch die m- oder p und ganz besonders die p-Position.

Der $R_3$-Rest stellt - wie ausgeführt - entweder Wasserstoff, Methyl oder eine Gruppe vom Typ $-CH-X-CHR_5R_6$ dar. Bevorzugt sind dabei $R_3$-Reste mit $R_3$ = Wasserstoff oder Methyl. Innerhalb der $-CH-X-CHR_5R_6$-Reste sind solche des Aufbaus

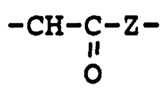

bevorzugt.

Die Gruppe X ist vom Typ

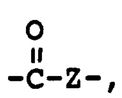, 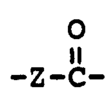 oder 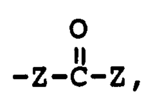,

wobei Gruppen vom Typ

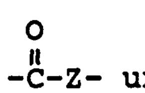 und 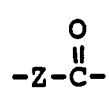

bevorzugt sind und ganz besonderer Vorrang der Gruppe

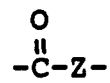

gegeben wird.

Prinzipiell kann -Z- Sauerstoff oder eine Gruppe $-NR_4$-sein mit $R_4$ = Wasserstoff oder einem Alkylrest. Bevorzugt sind ganz generell Sauerstoff oder eine $-NR_4$-Gruppe mit $R_4 \neq$ Wasserstoff. Ganz besonders bevorzugt sind jedoch -Z-Gruppen, in denen -Z- = Sauerstoff ist.

Die Gruppe $-CHR_5R_6$ ist - wie bereits ausgeführt - zweckmäßig in ihrem Raumbedarf (Van der Waals Volumen) dem

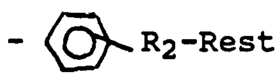

anzupassen. Besonderes Interesse finden $-CHR_5R_6$-Reste, in denen $R_5$ und $R_6$ zu einem cycloaliphatischen Ring geschlossen sind. Hierbei sind Ringe mit 5 - 12 Kohlenstoffatomen im Ring zu berücksichtigen. Bevorzugt sind Ringe mit 5 - 7 Kohlenstoffatomen im Ring und ganz besonders Cyclohexylreste, wobei der Ring jeweils auch substituiert sein kann. Auch hier gilt die oben genannte wechselseitige Anpassung: für den Fall, daß $R_1$ = Wasserstoff ist und $R_2$ keine quartären Kohlenstoffe enthält (= Kohlenstoffatom, das von 4 Kohlenstoffatomen umgeben ist) sollte der Cycloalkylrest nicht an einem Ring-Kohlenstoffatom zweifach substituiert sein, d.h. in diesem Fall sollte auch der $CHR_5R_6$-Rest keinen quartären Kohlenstoff aufweisen. Umgekehrt kann insbesondere dann, wenn der $R_2$-Rest einen quartären Kohlenstoff enthält, auch der $CHR_5R_6$-Rest einen quartären Kohlenstoff enthalten. In diesem Fall sind sogar solche $CHR_5R_6$-Reste bevorzugt, in denen wenigstens 1 Kohlenstoffatom des $CHR_5R_6$-Restes - im allgemeinen 1 Kohlenstoffatom des $R_6$-Restes - mit höchstens 1 Wasserstoffatom substituiert ist. In der Regel wird $R_5$ = Wasserstoff sein oder mit $R_6$ einen Ring bilden. Darüber hinaus kann $R_5$ aber auch einen Alkylrest mit 1 - 5 Kohlenstoffatomen darstellen.

Betrachtet man das das Polymere P1 im wesentlichen aufbauende Monomere der Formel I, so kommen in der Regel alle alkylsubstituierten Styrole und/oder $\alpha$-Methylstyrole in Frage, wobei insbesondere solche $R_2$-Reste zu nennen sind, in denen $R_2$ für einen Rest $CH_3CR_7R_8$ steht, wobei $R_7$ für Wasserstoff oder einen Alkylrest mit 1 - 8 Kohlenstoffatomen und $R_8$ für einen Alkylrest mit 1 - 8 Kohlenstoffatomen steht.
Besonders bevorzugt sind solche $R_2$-Reste, in denen $R_7$ und $R_8$ für Methyl stehen. Daneben kann $R_2$ auch Methyl, Ethyl oder n-Propyl sein.

Der Gehalt von Monomeren der Formel I an Polymeren P1 richtet sich nach dem Ausmaß der geforderten Verträglichkeit und beträgt wenigstens 30 Gew.-%, in der Regel wenigstens 60 Gew.-%, bevorzugt wenigstens 80 Gew.-%. Besonders bevorzugt sind solche Polymeren P1 mit wenigstens 95 Gew.-% Gehalt an Monomeren der Formel I. Für den Fall, daß $R_1$ = H ist, sind Homopolymere P1 aus den Monomeren der Formel I die ganz besonders bevorzugte Ausführungsform.

Als Comonomere für den Aufbau des Polymeren P1 für den Fall, daß Comonomeren überhaupt enthalten sind, kommen insbesondere (von I verschiedene) Vinylmonomere in Betracht. (Vgl. Ullmann's Encyclopädie der Technischen Chemie, 3. Auflage, 14. Band, S. 108 - 109, Urban & Schwarzenberg 1963). Dabei sind Monomere, die nur aus den Elementen Kohlenstoff, Wasserstoff und Sauerstoff aufgebaut sind, bevorzugt. Insbesondere sind dies Vnylester und/oder (Meth)acrylsäureester, im allgemeinen solche mit 4 - 22 Kohlenstoffatomen im Molekül. In untergeordneten Anteilen, d.h. in Anteilen zu weniger als 20 Gew.-% kann auch Styrol oder $\alpha$-Methylstyrol im Polymeren enthalten sein.

Während das Polymere P1 demnach mit anderen hydrophoben Vinylverbindungen modifiziert werden kann, ist der Anteil an sehr polaren Monomeren, wie z.B. Acrylamid, Acrylnitril, Maleinsäureanhydrid, Maleinsäureimiden, p-(2-Hydroxylhexafluoroisopropyl)styrol oder Allylalkohol sehr begrenzt. Der Anteil dieser polaren Monomeren sollte unter 10 Gew.-%, bzw. unter 5 Gew.-% an dem Polymeren P1 liegen. Besonders bevorzugt sind solche Polymere A, die weniger als 0,1 Gew.-% dieser polaren Monomeren enthalten.

Der Gehalt der Monomeren II an Polymeren P2 richtet sich ebenfalls nach dem Ausmaß der geforderten Verträglichkeit und beträgt mindestens 30 Gew.-%, in der Regel wenigstens 50 Gew.-%, bevorzugt wenigstens 70 Gew.-% und in einer besonders bevorzugten Ausfuhrungsform > 95 Gew.-%. Für viele

Anwendungszwecke ganz besonders interessant ist der Einsatz von Homopolymeren der Monomeren II zum Aufbau der Polymeren P2.

Als Comonomere für den Aufbau des Polymeren P2 kommen neben den Monomeren der Formel II die für das Polymere P1 genannten Monomeren in Frage, wobei der Einsatz von sehr polaren Monomeren auch hier begrenzt ist (in der Regel werden polare Monomere auf einen Gehalt von < 20 Gew.-%, bevorzugt < 5 Gew.-% begrenzt).

Bei den Monomeren der Formel II, die das Polymere P2 im wesentlichen (> 50 Gew.-%) - wenn nicht gar zu 100 % - aufbauen, handelt es sich um die aus der Formel II ableitbaren Vinylester, Vinylamide, Vinylcarbonate, Vinylurethane und Vinylharnstoffe sowie die entsprechenden Propenylverbindungen. Darüber hinaus stehen die Monomeren der Formel II für Amide und Ester der Itaconsäure. Bevorzugte Monomere II sind jedoch Ester und Amide der Acrylsäure und der Methacrylsäure. Dabei sind ganz generell - wie bereits ausgeführt - die Ester besonders bevorzugt. Fur den Fall, daß stickstoffhaltige Monomere der Formel II zum Einsatz kommen, sind solche ohne NH-Gruppe bevorzugt.

Speziell sind als Monomere der Formel II zu nennen: gegebenenfalls substituierte Vinyl- oder Propenylester der Cycloalkancarbonsäuren und Cycloalkylcarbonate, Cycloalkylacrylate, Cycloalkylmethacrylate und Cycloalkylitaconate, gegebenenfalls substituierte Vinylester- oder Propenylester der Phenylalkylcarbonsäuren und Phenylalkylcarbonate, der Phenylalkylacrylate -methacrylate und -itaconate. Besonders zu nennen sind Cyclohexylacrylat und Cyclohexylmethacrylat. Dabei ist jedoch stets zu beachten, daß die Monomeren der Formel II des Polymeren P1 und die Monomeren der Formel II der Polymeren P2 nicht isoliert gesehen werden können.

So ist irmer die Abstoßung der Untereinheiten des Monomerbausteins I und die räumliche Ausdehnung (Van der Waals-Volumen) der Untereinheiten des Monomerbausteins I in Relation zu einer Abstoßung der Untereinheiten des Monomerbausteins II und deren räumliche Ausdehnung zu sehen.

So weist beispielsweise Poly-p-tert.butylstyrol (als Polymer P1) einen ausgeprägten, sterisch anspruchsvollen aliphatischen Teil (die t-Butylgruppe) direkt neben der Phenylengruppe auf. Die damit vorhandene ausgeprägte Abstoßung zwischen dem aliphatischen und dem aromatischen Teil dieser Monomereinheit macht Poly-p-tert.butylstyrol zu einem idealen Abmischungspartner für Polymer P2, wobei lediglich als Einschränkung gilt, daß Polymer P2 ebenfalls eine ausgeprägte Abstoßung innerhalb des Monomerbausteins aufweisen sollte, d.h. neben der polaren Gruppe X einen großen (am besten sogar verzweigten) aliphatischen Rest $-CHR_5R_6$.

So ist demzufolge auch Poly-p-tert.butylstyrol (Polymer P1) mit dem sterisch anspruchsvollen Poly-3,3,5-Trimethylcyclohexylacrylat unbegrenzt verträglich (über den genannten Mischungsbereich 1 : 99 bis 99 : 1). Bei der Polymermischung PM wird im ganzen experimentell zugänglichen Temperaturbereich (d.h. bis zu > 250 Grad C) völlige Verträglichkeit gefunden.

Als Beispiel für eine erfindungsgemäße Polymermischung PM mit unbegrenzter Verträglichkeit seien angeführt:

**Polymer P1**

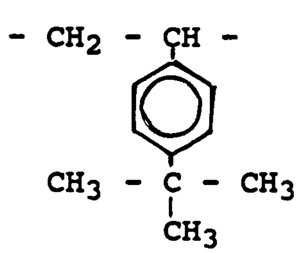

**Polymer P2 mit den Einheiten**

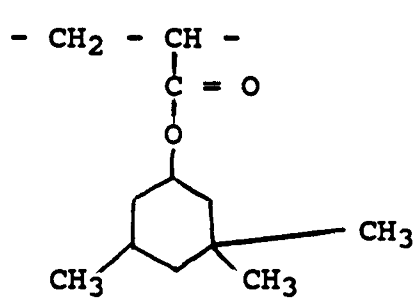

Im Zuge der beispielhaften Erläuterung wird etwa mit Poly-p-tert.butylstyrol als Modellsystem an 6 weiteren Beispielen die ausgezeichnete Verträglichkeit des Poly-p-tert.Butylstyrols als Polymer P1 mit dem Polymeren P2 demonstriert.

Im Unterschied zum Poly-p-tert.Butylstyrol als Polymer P1 zeigt Poly-p-Methylstyrol keine ausgeprägten aliphatischen Bereiche neben der Phenylengruppe auf, d.h. die Abstoßung der Gruppe innerhalb des Monomerbausteins ist wesentlich geringer. Damit ist auch die Variationsbreite innerhalb des Polymeren P2 geringer. So ist demzufolge Poly-p-Methylstyrol mit dem oben genannten Poly-3,3,5-Trimethylcyclohexylacrylat völlig unverträglich. Völlige Verträglchkeit wird dagegen mit dem Polycyclohexylacrylat als Polymer P2 gefunden. (Poly-p-methylstyrol und Polycyclohexylacrylat weisen beide keine quartären C-Atome im Alkylrest auf und sind in der Geometrie vergleichbar).
Demgegenüber zeigt das mit sterisch anspruchsvollen Polymeren P2 ausgezeichnete Verträglichkeit aufweisende Poly-p-tert.Butylstyrol als Polymer P1 mit dem sterisch weniger anspruchsvollen, ein deutlich kleineres Van der Waals-Volumen aufweisende, Poly-cycl.hexylacrylat als Polymer P2 schon eine deutlich verringerte Verträglichkeit auf. Zwar sind diese Polymeren bei Raumtemperatur noch voll verträglich, bei Erwärmen auf ca. 80 Grad C tritt jedoch Entmischung auf.

Beispiel für eine erfindungsgemäße Polymermischung mit unbegrenzter Verträglichkeit:

Polymer P1

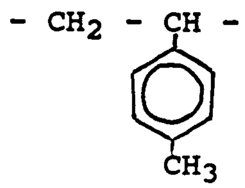

Polymer P2 mit den Einheiten:

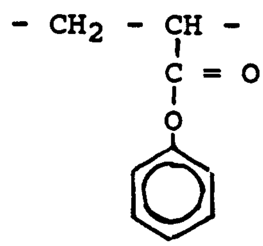

Neben diesen im gesamten Temperaturbereich und in allen Abmischungsverhältnissen verträglichen Polymermischungen sind auch solche Polymermischungen PM von Interesse, die nur in enem begrenzten Temperaturbereich (z.B. < 100 Grad C) verträglich sind.
In der Regel kann das Mischungsverhältnis von Polymer P1 zu Polymer P2 in weiten Grenzen variiert werden. So bestehen die erfindungsgemäßen Polymermischungen PM aus:

A) 0,1 - 99,9 Gew.-% eines Polymeren P1, das zu weniistens 30 Gew.-% aus den Monomeren der Formel I aufgebaut ist und

B) 99,1 - 0,1 Gew.-% eines Polymeren P2, das zu wenigstens 30 Gew.-% aus den Monomeren der Formel II aufgebaut ist.

Von Interesse sind vor allem solche Polymermischungen, die zu 1 - 99 Gew.-% aus Polymeren P1 und zu 99 - 1 Gew.-% aus dem Polymeren P2 bestehen. Besonders interessant sind solche Polymermischungen, die zu 10 - 90 Gew.-% aus Polymer P1 und zu 90 - 10 Gew.-% aus Polymer P2 bestehen. Ganz besonders interessant schließlich sind die Polymermischungen, die zu 20 - 80 Gew.-% aus Polymer P1 und zu 80 - 20 Gew.-% aus Polymer P2 bestehen. Dabei hängt die Zusammensetzung der Polymermischung PM von den jeweiligen technischen Anforderungen ab (siehe unten).

Von den anwendungstechnischen Anforderungen hängt es auch ab, ob Polymer P1 auch Monomere der Formel II enthalten kann oder Polymer P2 auch Monomere der Formel I. Als Regel kann gelten, daß der Gehalt der Monomeren der Formel I im Polymeren P1 um wenigstens 30 Gew.-% höher sein soll als der Gehalt der Monomeren der Formel I im Polymeren P2. Analog soll der Gehalt an Monomeren der Formel II im Polymeren P2 wenigstens 30 Gew.-% höher sein als der Gehalt an Monomeren der Formel II im Polymeren P1. Besonders bevorzugt sind solche Polymermischungen, in denen der Gehalt an Monomeren der Formel I im Polymeren P2 < 10 Gew.-%, ganz besonders bevorzugt 0 Gew.-%, und der Gehalt an Monomeren der Formel II im Polymeren P1 ebenfalls < 10 Gew.-%, ganz besonders bevorzugt 0 Gew.-%, beträgt.
Im allgemeinen gilt, daß der Gehalt an Monomeren der Formel I im Polymeren P1 und der Gehalt an Polymeren der Formel II im Polymeren P2 vor allem dann gering sein kann, wenn die übrigen Monomerbausteine im Polymeren P1 und im Polymern P2 chemisch weitgehend übereinstimmen.

Die **Charakterisierung** der erfindungsgemäßen Polymermischungen PM als **verträgliche** Mischungen erfolgt nach den anerkannten Kriterien (vgl. Kirk-Othmer, loc.cit, Vol. 18, pp. 457 - 460).

a) Bei Anwendung optischer Verfahren beobachtet man bei den erfindungsgemäßen Polymermischungen PM einen **einzigen Brechungsindex,** der zwischen denen der beiden Polymerkomponenten P1 und P2 liegt.

b) Die Polymermischungen PM besitzen **eine einzige** Glasübergangstemperatur Tg (die zwischen der der Polymerkomponenten liegt)

Zur weiteren Charakterisierung der erfindungsgemäßen Polymermischungen PM siehe auch den oben

genannten Beitrag von M.T. Shaw in "Polymer Blends and Mixtures."

Herstellung der Polymerisate P1 und P2

Die Herstellung der Polymerisate P1 und P2 kann nach den bekannten Regeln der Polymerisation und nach bekannten Verfahren erfolgen. Die Polymeren vom Typ P1 können z.B. nach Houben-Weyl, Methoden der Organischen Chemie, 4. Auflage, Bd. XIV/1, pp 761 - 841, Georg Thieme-Verlag (1961) hergestellt werden; sie sind z.T. auch in geeigneter Form im Handel erhältlich. Dabei kann vorzugsweise das radikalische, es können aber auch ionische Polymerisationsverfahren zur Anwendung kommen. Die Molgewichte M der erfindungsgemäß eingesetzten Polymeren P1 liegen in der Regel oberhalb von 3 000, bevorzugt im Bereich von 5 000 - 1 000 000, besonders bevorzugt im Bereich 20 000 - 500 000. (Bestimmung durch Lichtstreuung) Es sei indessen betont, daß die Molgewichte die Eignung als Komponente in den verträglichen Polymermischungen PM nicht kritisch zu beeinflussen scheinen. Dies gilt sowohl für die Homo- als die Copolymerisate der Typen P1 und P2. Für eine Verträglichkeit von Polymer P1 und Polymer P2 ist die Taktizität der Polymeren von gewisser Bedeutung. In der Regel ist insbesondere ein Polymeres P2 mit einem geringen Anteil an isotaktischen Triaden (wie es beispielsweise durch radikalische Polymerisation erhalten wird) gegenüber Polymeren mit einem hohen isotaktischen Anteil, wie es durch spezielle ionische Polymerisation erzeugt wird, bevorzugt.
Die Herstellung der Homo- bzw. Copolymerisate P2 erfolgt in der Regel durch radikalische Polymerisation. (Vgl. H. Rauch-Puntigam, Th. Völker, Acryl- und Methacrylverbindungen, Springer-Verlag 1967). Wenn auch prinzipiell (z.B. bei Acrylsäure- oder Methacrylsäurederivaten) eine Herstellung durch anionische Polymerisation oder Group-Transfer-Polymerisation (siehe auch O.W. Webster et al., J. Am. Chem. Soc., 105, 5706 (1983)) möglich ist, so ist doch die bevorzugte Herstellungsform die radikalische Polymerisation.

Die Molgewichte M der Polymerisate P2 liegen in der Regel oberhalb von 3 000 im allgemeinen im Bereich von 10 000 bis 1 000 000, vorzugsweise 20 000 bis 300 000. Bei der Auswahl der Monomerkomponenten, die als Comonomere bei P2 eingesetzt werden sollen, ist darauf zu achten, daß die Glastemperatur Tg des resultierenden Polymerisats die technische Anwendbarkeit des Gesamtsystems PM nicht einschränkend beeinflußt.
So soll für die Herstellung von Formkörpern aus der Polymermischung PM wenigstens eines der Polymeren P1 und P2 eine Glastemperatur Tg > 70 Grad C aufweisen; bevorzugt ist für diese Anwendung, daß auch die Polymermischung PM eine Glastemperatur Tg > 70 Grad C aufweist. Diese Einschränkung gilt bevorzugt für die Herstellung von spritzgegossenen, gepressten bzw. extrudierten Gegenständen aus der Polymermischung PM. Für andere Anwendungsgebiete, beispielsweise für Lacke, für Elastomere oder für eine reversible thermotrope Verglasung (Polymermischung mit Trübungspunkt beim Erwärmen), also für eine Anwendung gemäß DE-A 34 36 477.3, sind jedoch solche Polymermischungen PM bevorzugt, die eine Polymerkomponente P2 mit einer Glastemperatur Tg < 40 Grad C oder bevorzugt 20 Grad C aufweisen.

Herstellung der Mischungen PM

Die verträglichen Mischungen PM können durch die unterschiedlichen Verfahren hergestellt werden. Sie werden z.B. durch intensives mechanisches Vermischen der Komponenten P1 und P2 in der Schmelze, im Extruder usw. erzeugt; oder sie können auch aus einem gemeinsamen Lösungsmittel heraus als sogenannte "solution cast polyblends" hergestellt werden. (Vgl. Kirk-Othmer "Encyclopedia of Chemical Technology" 3rd. Ed. Vol. 18, pg. 443 - 478, J. Wiley, 1982). Auch kann so vorgegangen werden, daß Polymere P1 in der Monomermischung des anderen Polymeren P2 aufgelöst wird und anschließend in Gegenwart von Polymer P1 erzeugt wird. Umgekehrt kann naturlich auch Polymer P1 in Gegenwart des Polymeren P2 erzeugt werden. Ebenso kann die Polymermischung PM aus gemeinsamen Fällungsmitteln gewonnen werden. Der Mischungsart sind keine Grenzen gesetzt. Ein sehr guter Überblick über die Herstellung von verträglichen Polymermischungen wird von M.T. Shaw, Seiten 57 - 67, in dem oben genannten Buch "Polymer Blends and Mixture" gegeben. Man erzeugt in der Regel zunächst Mischungen der Komponenten P1 und P2, wobei vorteilhaft von Feststoffen in Form beispielsweise eines Perlpolymerisats oder eines Granulats ausgegangen wird unter Verwendung langsam laufender Mischaggregate wie z.B. Trommel-, Rhönrad-, Doppelkammer-Pflugscharmischern u.ä.. Die langsam laufenden Mischaggregate verursachen ein mechanisches Mischen, ohne daß die Phasengrenzen aufgehoben werden. (Vgl. Ullmanns Encyclopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextrudern oder gegebenenfalls in Extrudern mit

oszillierender Schnecke und Scherstiften (z.B. m BUSSCO-Kneter).
Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymerverbindungen PM ist das Abmischen von Polymerdispersionen, enthaltend die Polymerkomponente P1 und Polymerdispersionen, enthaltend die Polymerkomponente P2. Diese Dispersionsmischungen können gemeinsam koaguliert werden, gemeinsam sprühgetrocknet werden oder gemeinsam auf einem Extruder abgequetscht werden.

Vorteilhafte Wirkungen der Mischungen PM

Die erfindungsgemäßen verträglichen Polymermischungen PM weisen insbesondere die nachfolgenden Vorteile auf, die die entsprechenden technischen Einsatzmöglichkeiten nahelegen, wobei P1 bzw. P2 jeweils stellvertretend für die unter die Polymeren P1 bzw. P2 fallenden Möglichkeiten aufgeführt sei.

1) Zunächst sind die Polymermischungen - im Unterschied zu Mischungen aus anderen Carbonylgruppen enthaltenden Polymeren und anderen Polystyrolen - verträglich. D.h. die erfindungsgemäßen Polymermischungen PM sind im nicht pigmentierten Zustand im Unterschied zu nicht verträglichen Polymermischungen glasklar (sie zeigen keine Lichtstreuung, d.h. in der Regel ist der Haze < 10 %). Erfindungsgemäß sind aber auch solche Mischungen, die nur bei Raumtemperatur verträglich sind, bei Temperaturerhöhung jedoch Entmischung zeigen.

2. Mischungen aus P1 und P2 zeigen wie Polystyrole selbst eine geringe Wasseraufnahme.

3. Durch Abmischen mit P2 läßt sich die Doppelbrechung der Polymeren P1 reduzieren. Die beiden vorgenannten Eigenschaften qualifizieren die erfindungsgemäßen Polymermischungen PM speziell als Datenspeichermaterial, insbesondere für optisch ablesbare Informationsträger. [Vgl. J. Hennig, Kunststoffe 75, pg 425 (1985)]

4. Durch Abmischen mit P2 kann in der Regel auch der Brechungsindex des Polymeren P1 reduziert werden. Beispielsweise kann P1 durch Abmischen mit P2 im Brechungsindex so verändert werden, daß der Brechungsindex der Polymermischung PM dem Brechungsindex einer eingelagerten Gummiphase angepaßt wird. Auf diesem Weg kann man transparente, schlagzähe Kunststoffe erhalten.

Besonderes Interesse finden auch Polymerkompositionen, die zu 40 - 99 Gew.-%, bevorzugt 70 - 95 Gew.-% aus der Polymermischung PM und zu 60 - 1 Gew.-%, bevorzugt 30 - 5 Gew.-% aus einem weiteren von P1 und P2 chemisch unterscheidbaren Polymeren P3 besteht, wobei gilt, daß Polymer P3 mit Polymer P1, P2 und mit der Mischung PM unverträglich ist.
In der Regel wird dabei die Zusammensetzung der Polymermischung PM so gewählt, daß der Brechungsindex des Polymeren P3 mit dem Brechungsindex der Mischung PM übereinstimmt, in der Regel soll also bei Raumtemperatur gelten:

$$|{}^{n}D^{25}PM - {}^{n}D^{25}P3| < 0{,}01$$

In der Regel wird das mit PM unverträgliche Polymere P3 eine Tg < 20 Grad C aufweisen und wenigstens teilweise mit wenigstens einem der Bestandteile der Polymermischung PM, also mit P1 oder P2, kovalent verknüpft sein. Darüber hanaus kann das Polymere P3 vernetzt sein.
Ganz besonders bevorzugt ist der Fall, daß das Polymere P3 Polybutadien oder Polyisopren ist.

Polymerkompositionen, aufgebaut aus 40 - 99 Gew.-% PM und 1 - 60 Gew.-% P3 zeichnen sich, insbesondere wenn P3 eine Tg < 20 Grad C aufweist, durch eine im Vergleich zu reinem PM verbesserte Schlagzähigkeit aus.

Insbesondere gestatten Polymerkompositionen aus 40 - 99 Gew.-% PM und 60 - 1 Gew.-% P3 eine einfache Schlagzähabmischung von Polymeren P2.

5. In der Regel werden die Gegenstände aus der Polymermischung PM durch Spritzen, Pressen, Extrudieren, Walzen oder Gießen hergestellt. Der Mantel aus Polymer P2 wird in der Regel durch Lackieren oder durch Coextrudieren aufgebracht.

6. Besonders interessant sind Mehrfachstegplatten, wie sie beispielsweise zum Verglasen von Gewächshäusern engesetzt werden, die aus einer Polymermischung PM hergestellt worden sind und einen Überzug aus P2 aufweisen.

7. Verarbeitungstechnische Vorteile resultieren bei der Anwendung von Mischungen PM aus > 90 Gew.-% P1 und < 10 Gew.-% P2. In diesem Falle übernimmt das P2 die Funktion eines Verarbeitungshilfsmittels. Dies ist insbesondere von Interesse für Polymere P1 mit $R_1$ = Methyl.

8. Aus den erfindungsgemäßen Polymermischungen PM lassen sich transparente Formkörper gewinnen, die an der Oberfläche durch Energieeinwirkung, z.B. geeignete Strahlung so modifiziert worden sind, daß

das Polymere P1 mit $R_1$ = $CH_3$ abgebaut worden ist, das Polymere P2 mit $R_3$ = Wasserstoff jedoch nicht. (Formkörper mit reflexmindernder Oberfläche, Resists). Ebenso lassen sich reflexmindernde Formkörper dadurch herstellen, daß $R_1$ = H ist und $R_3$ = $CH_3$. In diesem Fall kann das Polymere P2 durch Energieeinwirkung abgebaut werden.

9. Besonderes Interesse finden die erfindungsgemäßen Polymermischungen PM, die nur eine begrenzte Verträglichkeit aufweisen. Solche verträglichen Polymermischungen, die beim Erwärmen über die LCST lichtstreuend werden, lassen sich mit Vorteil gemäß DE-A 34 36 476.5 zur Darstellung optisch ablesbarer Information oder gemäß DE-A 34 36 477.3 zum Aufbau von Verglasungssystemen mit temperaturgesteuerter Transparenz einsetzen.

Der in der Regel hohe Unterschied im Brechungsindex zwischen Polymer P1 und Polymer P2 und die damit im Falle einer Entmischung starke Lichtstreuung sowie die breite Variationsmöglichkeit in den Größen $R_1$, $R_2$, $R_3$, $R_5$, $R_6$ und X machen die erfindungsgemäßen Polymermischungen PM für diesen Anwendungsbereich besonders geeignet. (Siehe auch das Beispiel Poly-p-tert.butylstyrol/Polycyclohexylacrylat).

Die nachfolgenden Beispiele sollen die Erfindung erläutern ohne sie einzuschränken. Dabei soll insbesondere mit Poly-p-tert.Butylstyrol als Polymer P1 (= Polymer P1 mit $R_1$ = H und $R_2$ = tert.Butyl), das als typischer Vertreter der Polymerspezies P1 angesehen werden kann (ausgeprägter aliphatischer Rest direkt neben der Phenylgruppe), die große Verträglichkeitsbreite der Polymeren P1 mit den Carbonylgruppen enthaltenden Polymeren P2 aufgezeigt werden.

Andererseits soll am Beispiel des Poly-p-methylstyrols, das als Polymer P1 mit $R_2$ = Methyl die Grenze des Gültigkeitsbereichs dieser Erfindung darstellt (Polystyrol: $R_3$ = Wasserstoff fällt nicht unter die vorliegende Erfindung!), auch die Grenze der Erfindung dargestellt werden. Es sei jedoch noch einmal darauf hingewiesen, daß gerade auch die Grenzbereiche der Verträglichkeit (siehe Punkt 10 oben) unter anwendungstechnischen Gesichtspunkten von besonderem Interesse sein können.

Die Bestimmung der reduz. Viskosität ($n_{spec/c}$) geschieht in Anlehnung an DIN 1342, DIN 51562 und DIN 7745. Die Bestimmung der Lichtdurchlässigkeit kann - sofern nicht anders vermerkt - nach DN 5036 vorgenommen werden. Die Trubung (haze) wird in % (ASTM D 1003) angegeben.Die Messungen werden in der Regel an einer 3 mm starken Platte ausgeführt. Die angegebenen Verhaltnisse beziehen sich auf Gewichtsverhältnisse.

## BEISPIELE

### Beispiel 1

Verträgliche Polymermischungen PM aus Poly-p-tert.Butylstyrol (= Polymer P1) und Poly-3,3,5-Trimethylcyclohexylacrylat (= Polymer P2). Poly-p-tert.Butylstyrol (Quelle: Aldrich, Deutschland; $\eta_{spc/c}$ 16 ml/g) wird in Toluol zu 20 Gew.-% gelöst. Ebenso wird aus Poly-3,3,5-Trimethylcyclohexylacrylat ($\eta_{spec/c}$ = 6,9) eine 20 %-ige Lösung in Toluol hergestellt.

Die Lösungen werden im Volumen-Verhältnis 20/80, 50/50, 80/20 gemischt. Aus diesen Mischungen werden Filme gegossen, im Vakuum getrocknet und anschließend visuell beurteilt.

Alle Abmischungen ergeben klare, farblose Filme. Alle drei Filme zeigen beim Erwärmen bis zur Zersetzung (> 250 Grad C) keine Entmischung.

### Beispiel 2

Poly-p-tert.Butylstyrol gemäß Beispiel 1 wird wie in Beispiel 1 beschrieben mit Poly-3,3,5-Trimethylcyclohexylmethacrylat (= Polymer P2) ($\eta_{spec/c}$ = 6,3 ml/g) gemischt. In jedem Mischungsverhältnis (20/80, 50/50, 80/20) resultieren glasklare, verträgliche Polymerfilme, die beim Erwärmen bis auf Temperaturen von ca. 250 Grad C keinerlei Entmischung zeigen.

### Beispiel 3

Poly-p-tert.Butylstyrol gemäß Beispiel 1 wird wie in Beispiel 1 beschrieben mit Polycyclohexylmethacrylat ($\eta_{spec/c}$ = 29 ml/g) als 20 %ige Lösung in Toluol gemischt und daraus ein Polymerfilm hergestellt.

Mischungsverhältnis: 50 Gew.-% Poly-p-tert.Butylstyrol
50 Gew.-% Poly-cyclohexylmethacrylat

Man erhalt einen glasklaren Polymerfilm, der beim Erwärmen auf 160 Grad C trüb wird (Entmischung).

Beispiel 4

Man verfährt wie in Beispiel 3, wählt jedoch Polycyclohexylacrylat als Polymer P2.
Es resultiert ein glasklarer Polymerfilm, der beim Erwärmen auf 80 Grad C trüb wird.
Polymermischungen gemäß Beispiel 3 und Beispiel 4 sind demzufolge für eine Anwendung als optische Datenspeicherplatte gemäß DE-A 34 36 476.5 sehr gut geeignet.

Beispiel 5

Herstellung einer Kunststoffplatte mit temperaturgesteuerter Transparenz. 20 Teile Poly-p-tert.Butylstyrol gemäß Beispiel 1 werden in 80 Teilen Cyclohexylacrylat gelöst. Man setzt 0,1 Teil tert.Butylperneodecanoat als Initiator und 0,5 Teile Dodecylmercaptan als Regler zu. Die Polymerlösung wird zwischen zwei Glasplatten zu einer klaren, farblosen 3 mm dicken Platte polymerisiert. Beim Erwärmen auf ca. 80 Grad C wird diese Platte schneeweiß.

Beispiel 6 - Negativbeispiel

Man verfährt wie in Beispiel 5, löst das Poly-p-tert.Butylstyrol jedoch in 80 Teilen MMA und polymerisiert.
Es resultiert eine inhomogene, unverträgliche, nicht transparente Kunststoffplatte.

Beispiel 7 - Negativbeispiel

Man verfährt wie in Beispiel 5, löst das Poly-p-tert.Butylstyrol jedoch in 80 Teilen t-Butylmethacrylat. Auch hier enthält man nach Polymerisation eine nicht transparente unverträgliche Polymermischung.

Beispiel 8 - Polymeres P2 als Copolymeres

Man verfährt wie in Beispiel 5, löst das Poly-p-tert.Butylstyrol (20 Teile) jedoch in einer Mischung aus 40 Teilen Propylmethacrylat und 40 Teilen Cyclohexylmethacrylat. Nach Beendigung der Polymerisation erhält man eine glasklare, homogene Kunststoffplatte.

Beispiel 9

Man verfährt wie in Beispiel 5, löst die 20 Teile Poly-p-tert.Butylstyrol jedoch in 80 Teilen 2-Ethylhexylmethacrylat. Nach Polymerisationsende resultiert eine glasklare, verträgliche Kunststoffplatte.

Beispiel 10

Poly-p-tert.Butylstyrol gemäß Beispiel 1 wird in Toluol zu 20 Gew.-% gelöst. Ebenso wird Poly-2-Ethylhexylacrylat zu 20 Gew.-% in Toluol glöst.
Die Lösungen werden im Verhältnis 20/80, 50/50, 80/20 gemischt. Aus den Mischungen werden Filme gegossen. Die Filme werden im Vakuum getrocknet und anschließend visuell beurteilt. Es resultieren in jedem Fall, klare, farblose Filme.

Beispiel 11

Poly-p-Methylstyrol ($\eta_{spec/c}$ = 4 ml/g) wird zu 20 Gew.-% in Toluol gelost. Ebenso wird Polycyclohexylmethacrylat ($\eta_{spec/c}$ = 29 ml/g) zu 20 Gew.-% in Toluol gelöst.
Die Lösungen werden im Verhältnis 5/95, 20/80, 50/50, 80/20, 95/5 gemischt. Aus diesen Mischungen werden Filme gegossen und getrocknet.
Alle Abmischungen ergeben klare, farblose Filme. Alle Filme zeigen beim Erwärmen bis zu 250 Grad C keine Entmischung.

Beispiel 12

20 Teile Poly-p-Methylstyrol ($\eta_{spec/c}$ = 83 ml/g) werden in 80 Teilen Cyclohexylacrylat gelöst. Nach Zusatz von 0,1 Teil tert.Butylperneodecanoat und 0,5 Teilen Dodecylmercaptan wird 48 Stunden bei ca. 50

Grad C polymerisiert. Die Polymerisation erfolgt zwischen Glasplatten. Man erhält eine glasklare, farblose, 3 mm dicke Kunststoffplatte (Haze < 3 %), die auch beim Erwärmen auf > 200 Grad C klar bleibt.

Beispiel 13

20 Teile Poly-p-Methylstyrol ($\eta_{spec/c}$ = 83 ml/g) werden in 60 Teilen Cyclohexylacrylat und 20 Teilen 3,3,5-Trimethylcyclohexylacrylat gelöst und nach Zusatz von 0,1 Teilen tert.Butylperneodecanoat und 0,5 Teilen Dodecylmercaptan gemäß Beispiel 12 polymerisiert. Man erhält eine glasklare, verträgliche Kunststoffplatte.

Beispiel 14 - Copolymerbeispiel

20 Teile Poly-p-Methylstyrol ($\eta_{spec/c}$ = 83 ml/g) werden in 60 Teilen Cyclohexylacrylat und 20 Teilen Butylacrylat gelost und nach Zusatz von 0,1 Teilen tert.Butylperneodecanoat und 0,5 Teilen Dodecylmercaptan gemäß Beispiel 12 polymerisiert. Man erhält eine glasklare, verträgliche Kunststoffplatte.

Beispiel 15

Negatavbeispiel mit nicht erfindungsgemäßem Verhältnis der Van der Waals-Volumina $V_W$ von

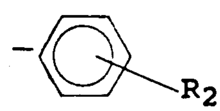

und $X\text{-}CHR_5R_6$.
20 Teile Poly-p-Methylstyrol ($\eta_{spec/c}$ = 83 ml/g) werden in 80 Teilen Decylmethacrylat gelöst und gemäß Beispiel 12 polymerisiert. Es restultiert eine entmischte, trübe Kunststoffplatte.
Berechnung der Van der Waals-Volumina:

Polymer P1: 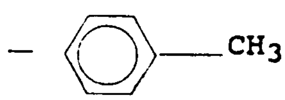 : 56,99 $cm^3$/Mol

Polymer P2: $-\underset{\underset{O}{\|}}{C}-O-(CH_2)_9-CH_3$ : 120,94 $cm^3$/Mol

Damit ist gemäß (1)

$$V_{W\,-COO-(CH_2)_9\,CH_3} \cdot 0{,}6 = 72{,}5\ cm^3/Mol,$$

größer als

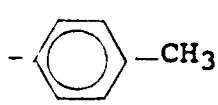

($V_W$ . 56, 99 $cm^3$/Mol) und somit nicht erfindungsgemaß.

Beispiel 16

Negativbeispiel mit mehreren, nicht erfindungsgemäßen Merkmalen:
1) Ungünstiges Verhältnis der Van der Waals-Volumina
2) Polymer P1 mit nur gering ausgeprägtem aliphatischen Teil ohne quartären Kohlenstoff, Polymer P2

mit großen geschlossenen Kohlenwasserstoffgruppe mit einem quartären Kohlenstoff.

20 Teile Poly-p-Methylstyrol ($\eta_{spec/c}$ = 83 ml/g) werden in 80 Teilen 3,3,5-Trimethylcyclohexylmethacrylat gelöst und gemäß Beispiel 12 polymerisiert.

Es resultiert eine entmischte, trübe Kunststoffplatte. Van der Waals-Volumina:

Polymer P1: 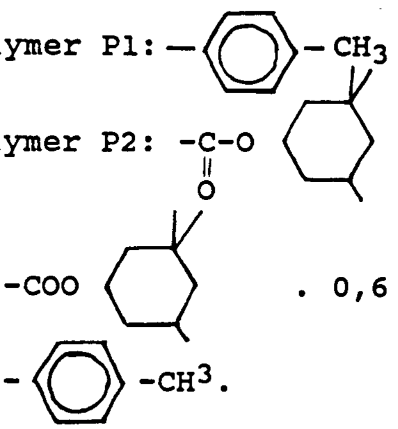 $-CH_3$ : 56,99 $cm^3$/Mol

Polymer P2: -C-O : 103,00 $cm^3$/Mol

$V_W$ -COO . 0,6 = 61,8 und damit größer als

$V_W$ - -CH3.

Gemäß (1) ist diese Mischung nicht erfindungsgemäß.

Beispiel 17

Aus 20 Teilen Poly-p-tert.Butylstyrol gemäß Beispiel 1 und 80 Teilen Isobornylmethacrylat wird in Toluol eine Lösung hergestellt und gemäß Beispiel 1 zu einem Film getrocknet. Es resultiert ein glasklarer, farbloser Film.

Beispiel 18

20 Teile Poly-p-tert.Butylstyrol gemäß Beispiel 1 werden in 80 Teilen Benzylacrylat gelöst und gemäß Beispiel 12 polymerisiert. Es resultiert eine glasklare, farblose Platte.

Beispiel 19

20 Teile Poly-p-tert.Butylstyrol gemäß Beispiel 1 werden in 80 Teilen 2-Phenylethylacrylat gelöst und gemäß Beispiel 12 polymerisiert. Es resultiert eine glasklare, farblose Platte.

**Patentansprüche**

**1.** Verträgliche Polymermischungen aus zwei Polymerkomponenten,
dadurch gekennzeichnet,
daß die verträglichen Polymermischungen PM aus
A) 0,1 - 99,9 Gew.-% eines Polymeren P1, das zu wenigstens 30 Gew.-% aus Monomeren der Formel I,

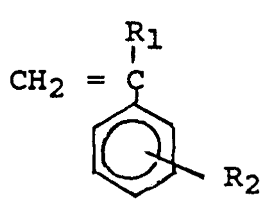

I

worin $R_1$ für Wasserstoff oder Methyl und $R_2$ für einen Kohlenwasserstoffrest mit 1 - 18 Kohlenstoffatomen steht, aufgebaut ist, mit der Maßgabe, daß bei Anwesenheit von Styrol oder $\alpha$-Methylstyrol als Comonomeren im Polymeren P1 deren Anteil weniger als 20 Gew.-% ausmacht und

B) 99,9 - 0,1 Gew.-% eines Polymeren P2, das zu wenigstens 30 Gew.-% aus Monomeren der Formel II

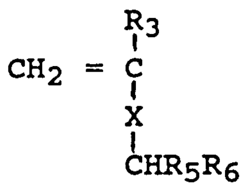

II

worin $R_3$ für Wasserstoff, Methyl oder eine Gruppe $-CH_2-X-CHR_5R_6$, X für eine Gruppe

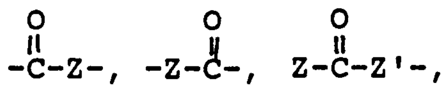

wobei Z = Sauerstoff oder $-NR_4$, Z' = Sauerstoff oder $NR_4$, und $R_4$ = Wasserstoff oder einen Alkylrest mit 1 - 12 Kohlenstoffatomen bedeuten, $-CHR_5R_6$ für einen aliphatischen oder araliphatischen Kohlenwasserstoffrest mit 5 - 24 Kohlenstoffatomen steht, aufgebaut ist.

bestehen.

2. Verträgliche Polymermischungen gemäß Anspruch 1, dadurch gekennzeichnet, daß die Van der Waals-Volumina der als Substituenten beteiligten Gruppen der Bedingung genügen:

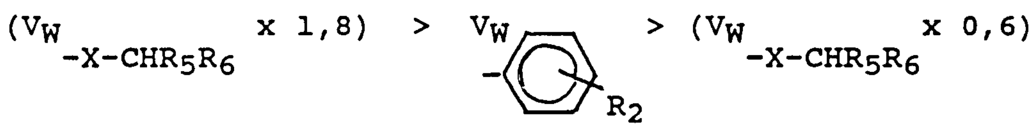

3. Verträgliche Polymermischungen gemäß den Ansprüchen 1 und 2, dadurch gekennzeichnet, daß die Mischungswärme der hydrierten Monomerbausteine des Polymeren P1 (H1) und der hydrierten Monomerbausteine des Polymeren P2 (H2) der Bedingung genügt:

$\Delta H_{Mischung\ (H1)/(H2)} < 50$ cal/Mol Mischung

4. Verträgliche Polymermischung gemäß den Ansprüchen 1 - 3, dadurch gekennzeichnet, daß $R_5$ und $R_6$ zu einem gegebenenfalls substituierten Ring mit 5 - 12 Kohlenstoffatomen im Ring verbunden sind.

5. Verträgliche Polymermischung gemäß den Ansprüchen 1 - 3, dadurch gekennzeichnet, daß $R_5$ für Wasserstoff oder einen Kohlenwasserstoffrest mit 1 - 5 Kohlenstoffatomen und $R_6$ für einen gegebenenfalls verzweigten aliphatischen, araliphatischen oder aromatischen Kohlenwasserstoffrest mit 4 - 18 Kohlenstoffatomen steht.

6. Verträgliche Polymermischung gemäß den Ansprüchen 1 - 5, dadurch gekennzeichnet, daß die Gruppe -X- fur

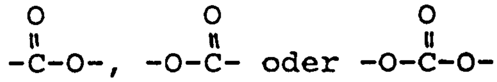

oder

steht.

7. Verträgliche Polymermischung gemäß den Ansprüchen 1 - 6, dadurch gekennzeichnet, daß $R_3$ für Wasserstoff oder Methyl steht.

8. Verträgliche Polymermischung gemäß den Ansprüchen 1 - 4, 6 und 7, dadurch gekennzeichnet, daß $R_5$ und $R_6$ zu einem Cyclohexanring verbunden sind.

9. Verträgliche Polymermischungen gemäß den Ansprüchen 1 - 3 und 5 - 7, dadurch gekennzeichnet, daß $R_6$ für einen verzweigten aliphatischen Rest mit 4 - 18 Kohlenstoffatomen steht.

10. Verträgliche Polymermischung gemäß den Ansprüchen 1 - 9, dadurch gekennzeichnet, daß $R_2$ für einen Rest $-CCH_3R_7R_8$ steht, wobei $R_7$ für Wasserstoff oder einen Alkylrest mit 1 - 8 Kohlenstoffatomen und $R_8$ für einen Alkylrest mit 1 - 8 Kohlenstoffatomen steht.

11. Verträgliche Polymermischung gemäß den Ansprüchen 1 - 10, dadurch gekennzeichnet, daß $R_2$ für t-Butyl steht.

12. Verträgliche Polymermischung gemäß den Ansprüchen 1 - 11, dadurch gekennzeichnet, daß $R_1$ für Wasserstoff steht.

13. Verträgliche Polymermischung gemäß den Ansprüchen 1 - 12, dadurch gekennzeichnet, daß $R_1$ für Wasserstoff und $R_2$ für t-Butyl steht.

14. Verträgliche Polymermischung gemäß Anspruch 1, dadurch gekennzeichnet, daß das Polymere P1 ein Poly-t-butylstyrol und das Polymer P2 ein gegebenenfalls mit Alkylgruppen mit 1 - 6 Kohlenstoffatomen substituiertes Polycyclohexyl(meth)acrylat darstellt.

15. Verträgliche Polymermischung gemäß Anspruch 14, dadurch gekennzeichnet, daß das Polymer P2 Poly-3,3,5-trimethylcyclohexylacrylat und/oder Poly-3,3,5-trimethylcyclohexylmethacrylat ist.

16. Verträgliche Polymermischung gemäß Anspruch 1, dadurch gekennzeichnet, daß Polymer P1 ein Poly-t-butylstyrol und Polymer P2 ein Poly-2-ethylhexylacrylat und/oder Poly-2-ethylhexylmethacrylat ist.

17. Verträgliche Polymermischung gemäß Anspruch 1, dadurch gekennzeichnet, daß Polymer P1 ein Poly-t-butylstyrol und Polymer P2 ein Poly-3,3-dimethylpropylmethacrylat ist.

18. Verträgliche Polymermischung gemäß Anspruch 1, dadurch gekennzeichnet, daß Polymer P1 ein Poly-t-alkylstyrol und Polymer P2 ein Poly-ω-phenylalkylacrylat mit einer Alkylkette mit 1 - 3 Kohlenstoffatomen ist.

19. Verträgliche Polymermischung gemäß Anspruch 18, dadurch gekennzeichnet, daß Polymer P1 ein Poly-t-butylstyrol und Polymer P2 ein Poly-2-ethylphenylacrylat und/oder Poly-benzylacrylat ist.

20. Verträgliche Polymermischung gemäß den Ansprüchen 1 - 4 und 6 - 8, dadurch gekennzeichnet, daß P1 ein Poly-p-methylstyrol und Polymer P2 ein Polycyclohexyl(meth)acrylat ist.

21. Verträgliche Polymermischung gemäß Anspruch 1, dadurch gekennzeichnet, daß die Polymermischung beim Erwärmen einen Trübungspunkt zeigt.

22. Verträgliche Polymermischung gemäß den Ansprüchen 1 - 21, dadurch gekennzeichnet, daß die Polymermischung einen Haze $< 10$ % aufweist (gemessen an einer 3 mm dicken Platte).

23. Polymerkomposition aus 40 - 99 Gew.-% der Polymermischung PM gemäß den Ansprüchen 1 - 22 und 60 - 1 Gew.-% eines weiteren von P1 und P2 chemisch unterscheidbaren Polymeren P3, das mit P1, P2 und PM unverträglich ist.

24. Gegenstände hergestellt aus den verträglichen Polymermischungen gemäß den Ansprüchen 1 - 23.

25. Gegenstände aus den verträglichen Polymermischungen gemäß Anspruch 24 mit einem Überzug aus Polymer P2.

**Claims**

1. Compatible polymer mixtures of two polymer components, characterised in that the compatible polymer mixtures PM consist of

A) 0.1 - 99.9 wt.% of a polymer P1, which is synthesised, in an amount of at least 30 wt.%, from monomers of Formula I,

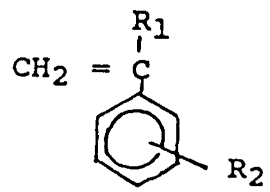

I

wherein $R_1$ represents hydrogen or methyl and $R_2$ represents a hydrocarbon group having 1 - 18 carbon atoms, with the proviso that in the presence of styrene or $\alpha$-methyl styrene as comonomers in the polymer P1, the amount of monomers is less than 20 wt.%, and

B) 99.9 - 0.1 wt.% of a polymer P2, which is synthesised, in an amount of at least 30 wt.%, from monomers of Formula II

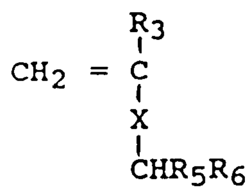

II

wherein $R_3$ represents hydrogen, methyl or a group $-CH_2-X-CHR_5R_6$, X represents a group

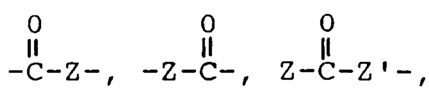

wherein Z = oxygen or $-NR_4$, Z' = oxygen or $NR_4$, and $R_4$ = hydrogen or an alkyl group having 1 - 12 carbon atoms, $-CHR_5R_6$ represents an aliphatic or araliphatic hydrocarbon group having 5 - 24 carbon atoms.

2. Compatible polymer mixtures according to claim 1, characterised in that the Van der Waals volumes of the groups acting as substituents correspond to:

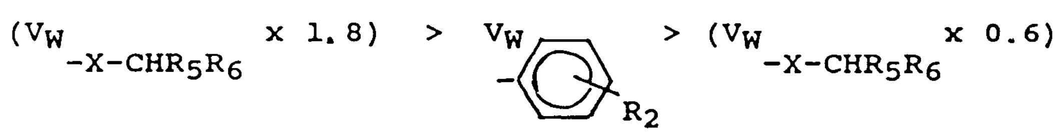

3. Compatible polymer mixtures according to claims 1 and 2, characterised in that the heat of mixing of the hydrogenated monomer particles of polymer P1 (H1) and the hydrogenated monomer particles of polymer P2 (H2) correspond to:

$\Delta H_{mixture}$ (H1)/(H2) < 50 cal/mol mixture

4. A compatible polymer mixture according to claims 1 to 3, characterised in that $R_5$ and $R_6$ are

connected to form an optionally substituted ring having 5 - 12 carbon atoms.

5. A compatible polymer mixture according to claims 1 to 3, characterised in that $R_5$ represents hydrogen or a hydrocarbon group having 1 - 5 carbon atoms and $R_6$ represents an optionally branched aliphatic, araliphatic or aromatic hydrocarbon group having 4 - 18 carbon atoms.

6. A compatible polymer mixture according to claims 1 to 5, characterised in that the group -X- represents

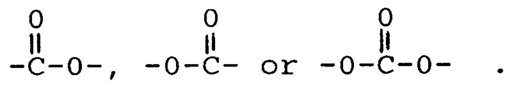

7. A compatible polymer mixture according to claims 1 to 6, characterised in that $R_3$ represents hydrogen or methyl.

8. A compatible polymer mixture according to claims 1 to 4, 6 and 7, characterised in that $R_5$ and $R_6$ are connected to form a cyclohexane ring.

9. Compatible polymer mixtures according to claims 1 to 3, and 5 to 7, characterised in that $R_6$ represents a branched aliphatic group having 4 - 18 carbon atoms.

10. A compatible polymer mixture according to claims 1 to 9, characterised in that $R_2$ represents a group $-CCH_3R_7R_8$, wherein $R_7$ represents hydrogen or an alkyl group having 1 - 8 carbon atoms and $R_8$ represents an alkyl group having 1 - 8 carbon atoms.

11. A compatible polymer mixture according to claims 1 to 10, characterised in that $R_2$ represents t-butyl.

12. A compatible polymer mixture according to claims 1 to 11, characterised in that $R_1$ represents hydrogen.

13. A compatible polymer mixture according to claims 1 to 12, characterised in that $R_1$ represents hydrogen and $R_2$ represents t-butyl.

14. A compatible polymer mixture according to claim 1, characterised in that the Polymer P1 is a poly-t-butyl styrene and the Polymer P2 is a polycyclohexyl(meth)acrylate, optionally substituted with alkyl groups having 1 - 6 carbon atoms.

15. A compatible polymer mixture according to claim 14, characterised in that the Polymer P2 is poly-3,3,5-trimethylcyclohexylacrylate and/or poly-3,3,5-trimethylcyclohexylmethacrylate.

16. A compatible polymer mixture according to claim 1, characterised in that Polymer P1 is a poly-t-butyl styrene and Polymer P2 is a poly-2-ethylhexylacrylate and/or poly-2-ethylhexylmethacrylate.

17. A compatible polymer mixture according to claim 1, characterised in that the Polymer P1 is a poly-t-butyl-styrene and Polymer P2 is a poly-3,3-dimethylpropylmethacrylate.

18. A compatible polymer mixture according to claim 1, characterised in that the Polymer P1 is a poly-t-alkyl-styrene and Polymer P2 is a poly-ω-phenylalkylacrylate with an alkyl chain having 1 - 3 carbon atoms.

19. A compatible polymer mixture according to claim 18, characterised in that the polymer P1 is a poly-t-butyl-styrene and Polymer P2 is a poly-2-ethylphenylacrylate and/or poly-benzylacrylate.

20. A compatible polymer mixture according to claims 1 to 4 and 6 to 8, characterised in that P1 is a poly-p-methylstyrene and Polymer P2 is a polycyclohexyl(meth)acrylate.

**21.** A compatible polymer mixture according to claim 1, characterised in that the polymer mixture exhibits a cloud point upon heating.

**22.** A compatible polymer mixture according to claims 1 to 21, characterised in that the polymer mixture exhibits a haze < 10% (measured on a plate with a thickness of 3 mm).

**23.** A polymer composition consisting of 40 - 99 wt.% of the polymer mixture PM, according to claims 1 to 22, and 60 - 1 wt.% of another Polymer P3 which is chemically distinguishable from P1 and P2 and incompatible with P1, P2 and PM.

**24.** Articles manufactured from the compatible polymer mixtures according to claims 1 to 23.

**25.** Articles made of compatible polymer mixtures according to claim 24, having a coating made of polymer P2.

**Revendications**

**1.** Mélanges de polymères compatibles, formés de deux composants polymères, caractérisés en ce que les mélanges de polymères compatibles PM se composent de

A) 0,1 à 99,9% en poids d'un polymère P1 qui se compose, pour 30% en poids au moins, de monomères de formule I

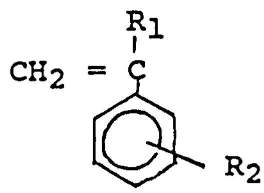

I

dans laquelle $R_1$ est mis pour un atome d'hydrogène ou un reste méthyle et $R_2$ est mis pour un reste hydrocarboné à 1-18 atomes de carbone, étant spécifié que lorsque du styrène ou de l'α-méthylstyrène est présent comme monomère dans le polymère P1, sa part s'élève à moins de 20% en poids, et

B) 99,9 à 0,1% en poids d'un polymère P2 qui se compose, pour 30% en poids au moins, de monomères de formule II

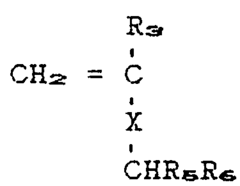

II

dans laquelle $R_3$ est mis pour un atome d'hydrogène, un reste méthyle ou un groupement $-CH_2-X-CHR_5R_6$, X est mis pour un groupement

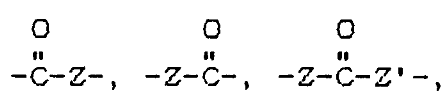

Z représentant un atome d'oxygène ou un groupement $-NR_4$, Z' représentant un atome d'oxygène ou un groupement $-NR_4$ et $R_4$ représentant un atome d'hydrogène ou un reste alkyle à 1-12 atomes de carbone, et $-CHR_5R_6$ est mis por un reste hydrocarboné aliphatique ou araliphatique à 5-24 atomes de carbone.

2. Mélanges de polymères compatibles selon la revendication 1, caractérisés en ce les volumes de Van der Waals des groupements contenus en tant que substituants satisfont à l'inégalité

$(V_{W\,-X-CHR_5R_6} \times 1{,}8) >$ 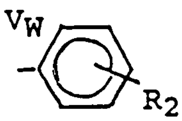 $> (V_{W\,-X-CHR_5R_6} \times 0{,}6)$

3. Mélanges de polymères compatibles selon les revendications 1 et 2, caractérisés en ce que la chaleur de mélange des éléments structuraux monomères hydrogénés du polymère P1 (H1) et des éléments structuraux monomères hydrogénés du polymère P2 (H2) satisfait à la condition
$\Delta H_{\text{mélange (H1)/(H2)}} < 50$ cal/mole de mélange

4. Mélange de polymères compatibles selon les revendications 1 à 3, caractérisé en ce que $R_5$ et $R_6$ sont liés en un noyau éventuellement substitué à 5-12 atomes de carbone dans le noyau.

5. Mélange de polymères compatibles selon les revendications 1 à 3, caractérisé en ce que $R_5$ est mis pour un atome d'hydrogène ou un reste hydrocarboné à 1-5 atomes de carbone et $R_6$ est mis pour un reste hydrocarboné aliphatique, araliphatique ou aromatique éventuellement ramifié à 4-18 atomes de carbone.

6. Mélange de polymères compatibles selon les revendications 1 à 5, caractérisé en ce que le groupement -X- est mis pour

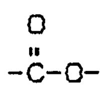, 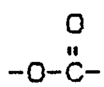 ou 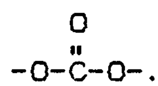.

7. Mélange de polymères compatibles selon les revendications 1 à 6, caractérisé en ce que $R_3$ est mis pour un atome d'hydrogène ou un reste méthyle.

8. Mélange de polymères compatibles selon les revendications 1 à 4, 6 et 7, caractérisé en ce que $R_5$ et $R_6$ sont liés en un noyau cyclohexane.

9. Mélanges de polymères compatibles selon les revendications 1 à 3 et 5 à 7, caractérisés en ce que $R_6$ est mis pour un reste aliphatique ramifié à 4-18 atomes de carbone.

10. Mélange de polymères compatibles selon les revendications 1 à 9, caractérisé en ce que $R_2$ est mis pour un reste $-CCH_3R_7R_8$, $R_7$ représentant un atome d'hydrogène ou un reste alkyle à 1-8 atomes de carbone et $R_8$ représentant un reste alkyle à 1-8 atomes de carbone.

11. Mélange de polymères compatibles selon les revendications 1 à 10, caractérisé en ce que $R_2$ est mis pour un reste t-butyle.

12. Mélange de polymères compatibles selon les revendications 1 à 11, caractérisé en ce que $R_1$ est mis pour un atome d'hydrogène.

13. Mélange de polymères compatibles selon les revendications 1 à 12, caractérisé en ce que $R_1$ est mis pour un atome d'hydrogène et $R_2$ pour un reste t-butyle.

14. Mélange de polymères compatibles selon la revendication 1, caractérisé en ce que le polymère P1 est un poly-t-butylstyrène et le polymère P2 est un poly(méth)acrylate de cyclohexyle éventuellement substitué par des groupements alkyle à 1-6 atomes de carbone.

**15.** Mélange de polymères compatibles selon la revendication 14, caractérisé en ce que le polymère P2 est un polyacrylate de 3,3,5-triméthylcyclohexyle et/ou un polyméthacrylate de 3,3,5-triméthylcyclohexyle.

**16.** Mélange de polymères compatibles selon la revendication 1, caractérisé en ce que le polymère P1 est un poly-t-butylstyrène et le polymère P2 est un polyacrylate de 2-éthylhexyle et/ou un polyméthacrylate de 2-éthylhexyle.

**17.** Mélange de polymères compatibles selon la revendication 1, caractérisé en ce que le polymère P1 est un poly-t-butylstyrène et le polymère P2 est un polyméthacrylate de 3,3-diméthylpropyle.

**18.** Mélange de polymères compatibles selon la revendication 1, caractérisé en ce que le polymère P1 est un poly-t-alkylstyrène et le polymère P2 est un polyacrylate d'ω-phénylalkyle comportant une chaîne alkyle à 1-3 atomes de carbone.

**19.** Mélange de polymères compatibles selon la revendication 18, caractérisé en ce que le polymère P1 est un poly-t-butylstyrène et le polymère P2 est un polyacrylate de 2-éthylphényle et/ou un polyacrylate de benzyle.

**20.** Mélange de polymères compatibles selon les revendications 1 à 4 et 6 à 8, caractérisé en ce que P1 est un poly-p-méthylstyrène et le polymère P2 est un poly(méth)acrylate de cyclohexyle.

**21.** Mélange de polymères compatibles selon la revendication 1, caractérisé en ce que le mélange de polymères présente un point de trouble au chauffage.

**22.** Mélange de polymères compatibles selon les revendications 1 à 21, caractérisé en ce que le mélange de polymères présente un voile < 10% (mesuré sur une plaque de 3 mm d'épaisseur).

**23.** Composition de polyères, comprenant 40 à 99% en poids du mélange de polymères PM selon les revendications 1 à 22 et 60 à 1% en poids d'un autre polymère P3 qui est différenciable chimiquement de P1 et P2 et qui est incompatible avec P1, P2 et PM.

**24.** Objets fabriqués à partir des mélanges de polymères compatibles selon les revendications 1 à 23.

**25.** Objets faits des mélanges de polymères compatibles selon la revendication 24, avec un revêtement de polymère P2.

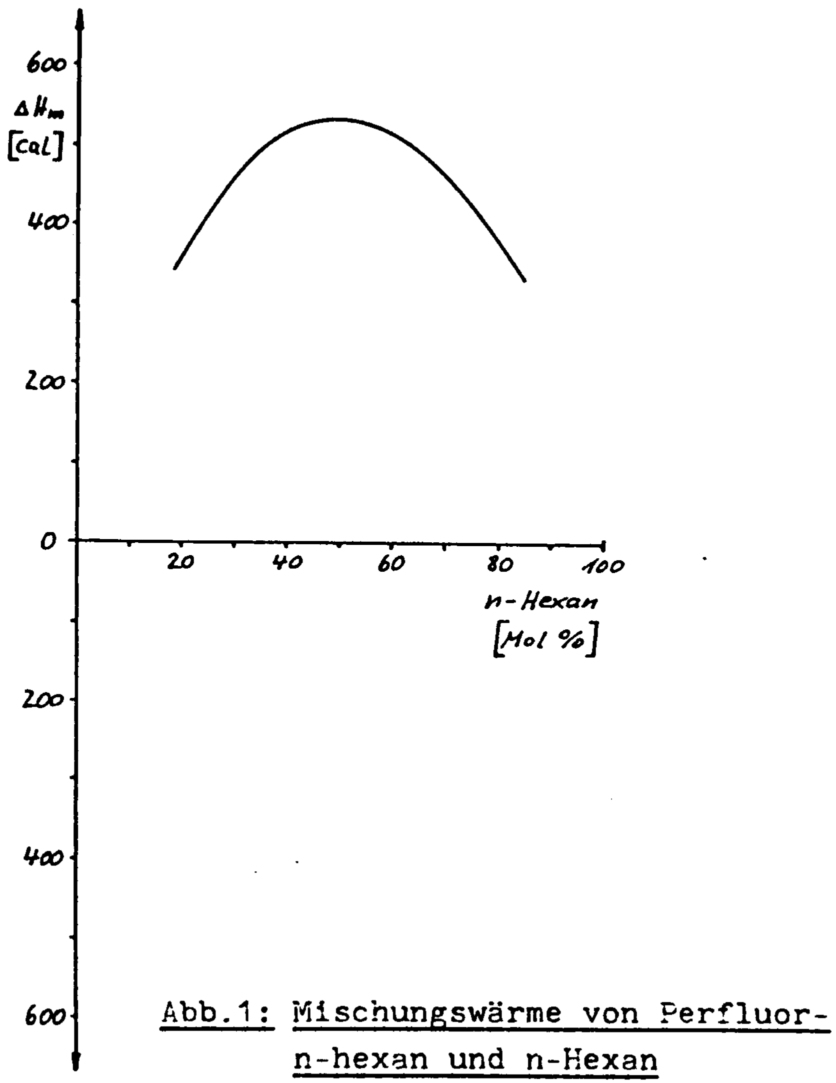


Abb.1: Mischungswärme von Perfluor-n-hexan und n-Hexan

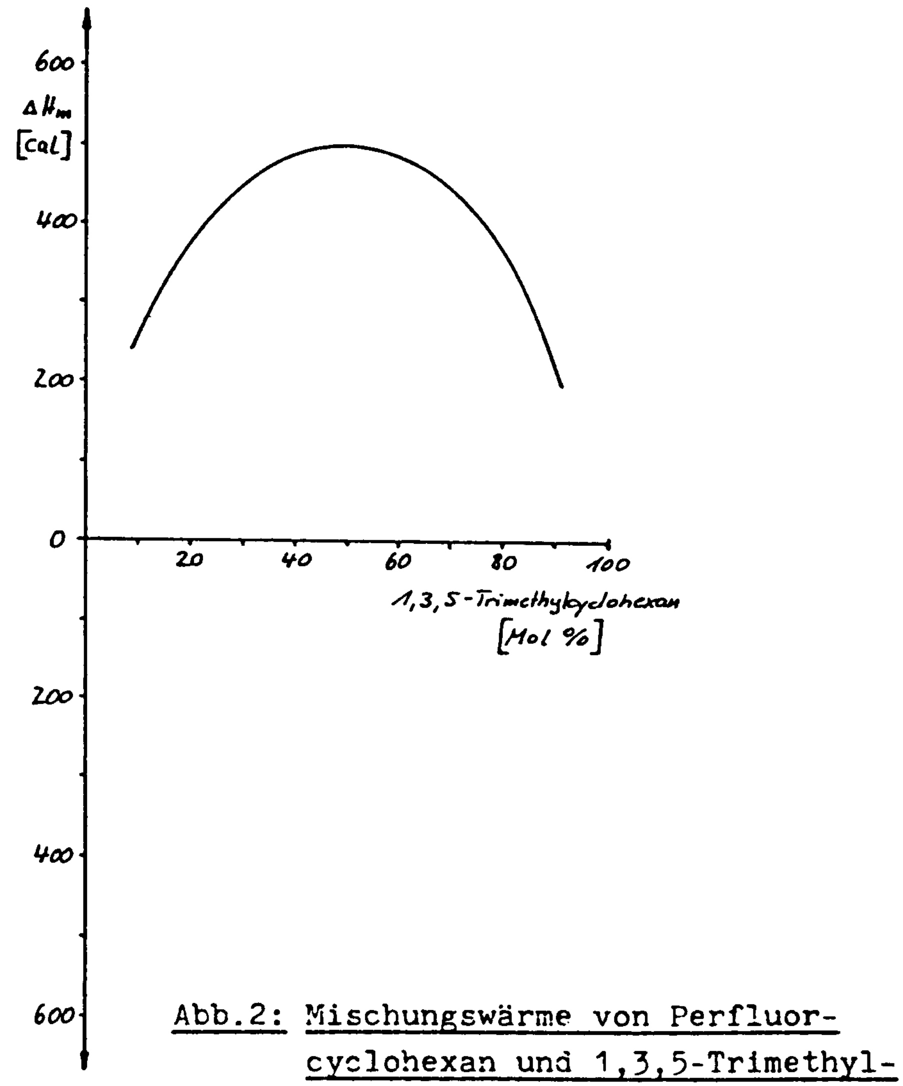


Abb.2: Mischungswärme von Perfluorcyclohexan und 1,3,5-Trimethylcyclohexan

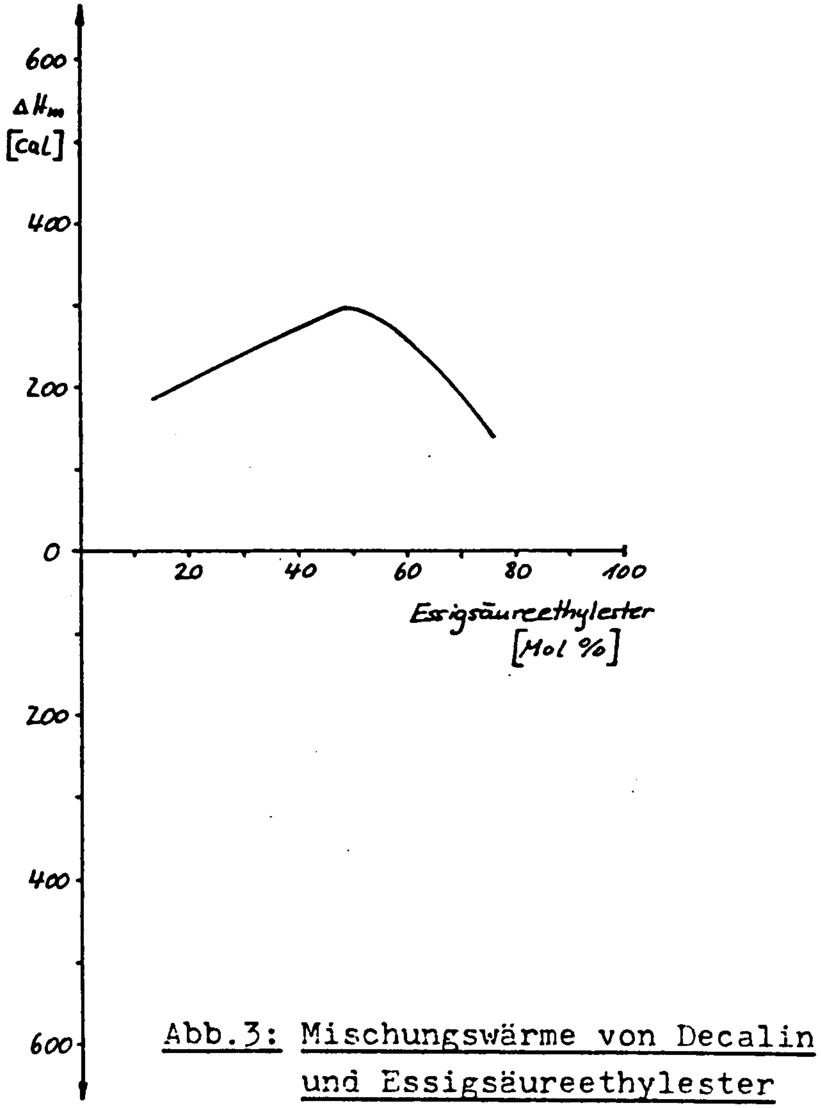


Abb.3: Mischungswärme von Decalin und Essigsäureethylester

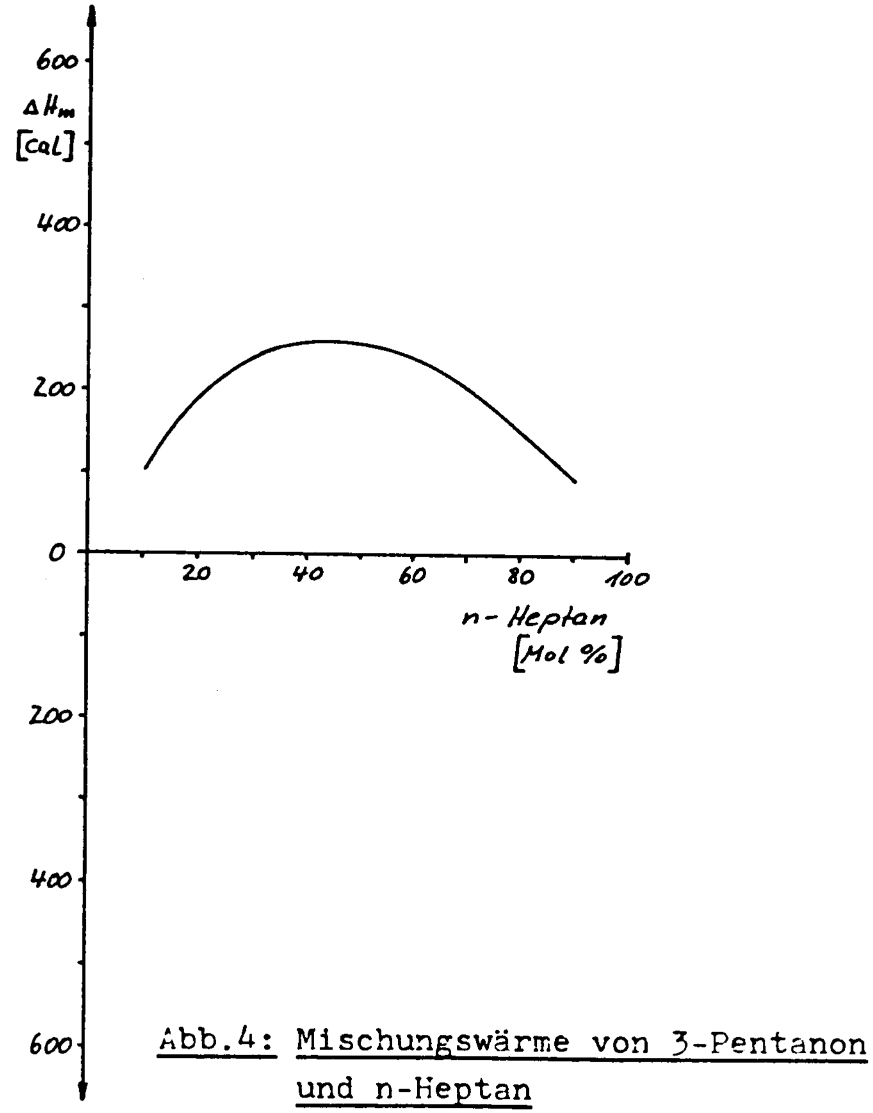


Abb.4: Mischungswärme von 3-Pentanon und n-Heptan

Abb.5: Wärmetönung beim Mischen von Essigsäureestern mit Cyclohexan

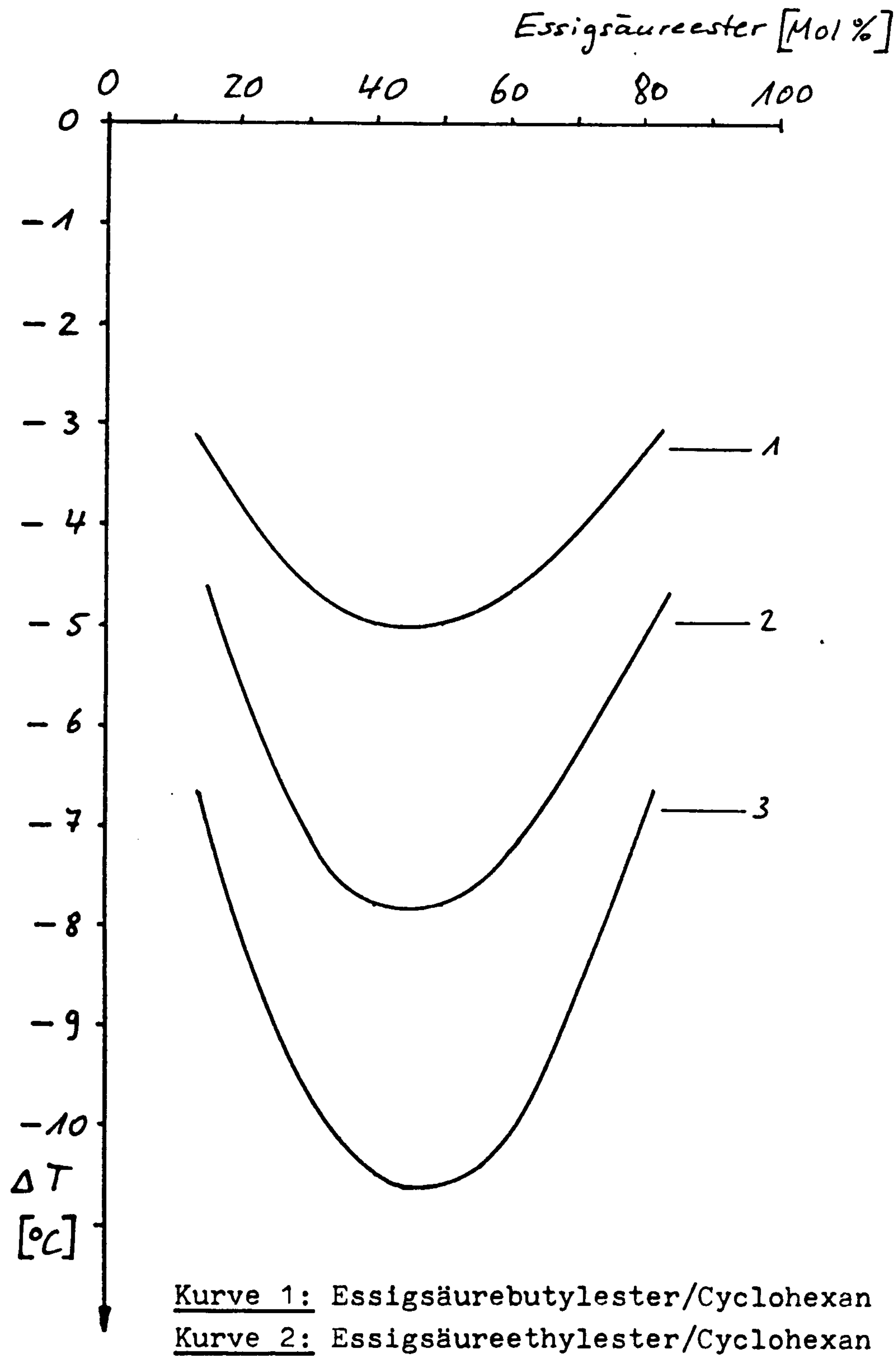


Kurve 1: Essigsäurebutylester/Cyclohexan
Kurve 2: Essigsäureethylester/Cyclohexan
Kurve 3: Essigsäuremethylester/Cyclohexan

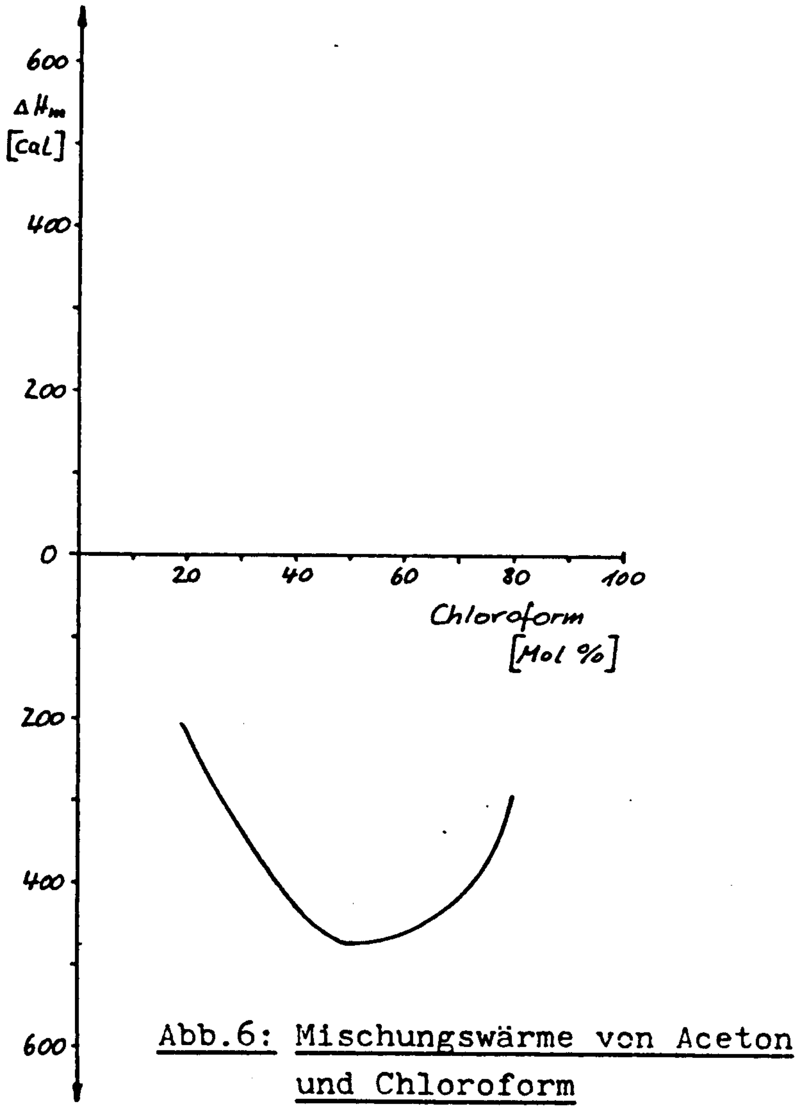


Abb.6: Mischungswärme von Aceton und Chloroform

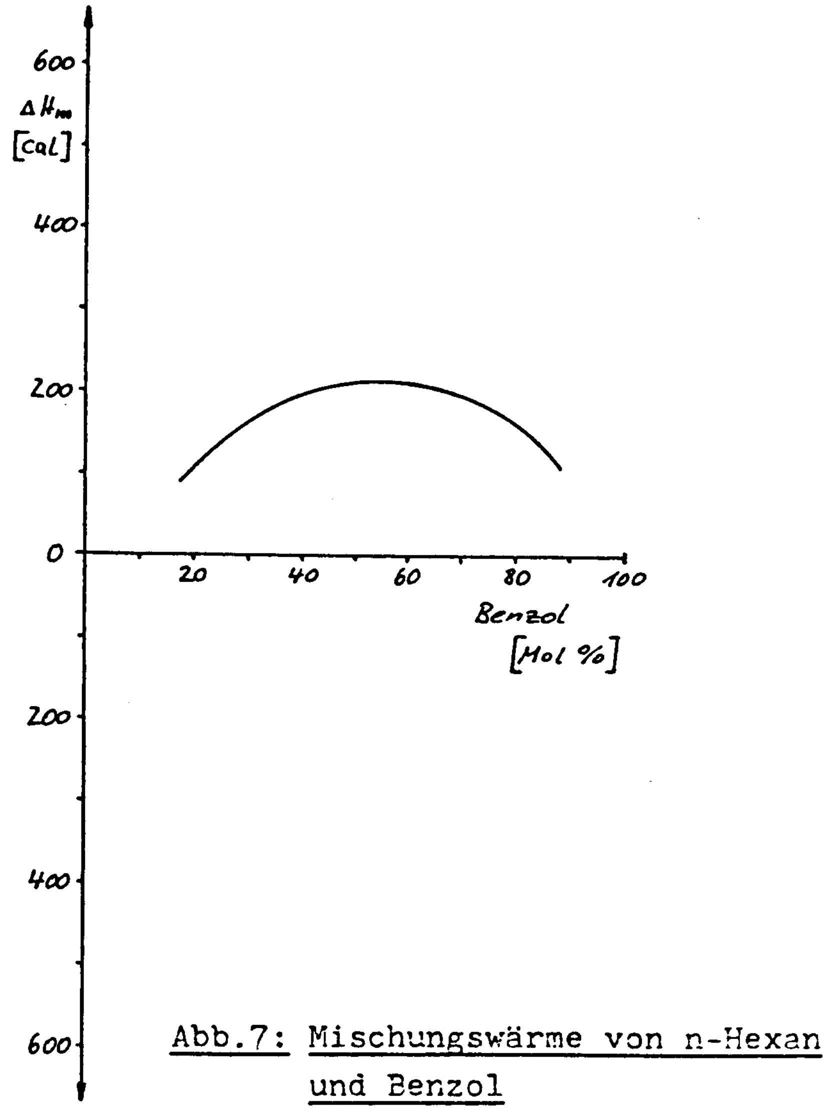


Abb.7: Mischungswärme von n-Hexan und Benzol